# EUROPEAN PATENT SPECIFICATION

(11) **EP 4 001 232 B1**
(45) Date of publication and mention of the grant of the patent: **03.09.2025**
(21) Application number: 20840748.6
(22) Date of filing: 14.07.2020
(51) Int. Cl.: B32B 17/10

(54) **LAMINATED GLASS INTERLAYER FILM AND LAMINATED GLASS**
ZWISCHENFOLIE FÜR VERBUNDGLAS SOWIE VERBUNDGLAS
FILM DE COUCHE INTERMÉDIAIRE DE VERRE FEUILLETÉ ET VERRE FEUILLETÉ

(30) Priority: 16.07.2019 JP 2019130849
(43) Date of publication of application: 25.05.2022
(73) Proprietor: SEKISUI CHEMICAL CO., LTD., Osaka-shi Osaka 530-8565 (JP)
(72) Inventor: CHOU, Kinryou, Kouka-shi, Shiga 528-8585 (JP); TAKEDA, Yuuma, Kouka-shi, Shiga 528-8585 (JP); IWAMOTO, Tatsuya, Kouka-shi, Shiga 528-8585 (JP); YOSHIDA, Shougo, 6045JB Roermond (NL); OKAZAWA, Shingo, Kouka-shi, Shiga 528-8585 (JP)
(74) Representative: Ter Meer Steinmeister & Partner
(86) International application number: PCT/JP2020/027389
(87) International publication number: WO 2021/010402

(56) References cited:
- EP-A1- 3 412 639
- WO-A1-2017/135447
- JP-A- 2007 055 822
- JP-A- 2018 154 519
- US-A1- 2017 320 297

## Description

### TECHNICAL FIELD

The present invention relates to an interlayer film for laminated glass which is used for obtaining laminated glass. Moreover, the present invention relates to a laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between two glass plates.

As one example of the interlayer film for laminated glass, Patent Document 1 discloses an interlayer film for laminated glass having a one-layer structure or a laminated structure of two or more layers. The interlayer film is a monolayer interlayer film having a one-layer structure including a first layer containing a thermoplastic resin, tungsten oxide particles, and an ultraviolet ray screening agent, or a multilayer interlayer film for laminated glass having a laminated structure of two or more layers including a first layer containing a thermoplastic resin and tungsten oxide particles, and a second layer containing an ultraviolet ray screening agent.

Patent Document 2 discloses an interlayer film for laminated glass including a first layer containing a thermoplastic resin, and at least one of an immonium compound and an aminium compound, and a second layer containing a polyvinyl acetal resin and a plasticizer, in which the thermoplastic resin contained in the first layer has a content of the hydroxyl group of 25% by mole or less.

Patent Document 3 also relates to an interlayer film for laminated glass which is used for obtaining laminated glass.

### Related Art Document

### Patent Document

Patent Document 1: WO2012/115198A1
Patent Document 2: JP 2011-042552 A
Patent Document 3: EP 3 412 639 A1

### SUMMARY OF THE INVENTION

### PROBLEMS TO BE SOLVED BY THE INVENTION

In the laminated glasses according to Patent Documents 1, 2, the heat shielding property can be enhanced. However, in a conventional laminated glass having heat shielding performance as described in Patent Documents 1, 2, the sound insulating property of the laminated glass can change with the variation in the ambient temperature. For example, in a conventional laminated glass, the sound insulating property of the laminated glass can change in a relatively high temperature region (for example, 22°C to 40°C), resulting that the sound insulating property cannot be enhanced depending on the temperature.

An object of the present invention is to provide an interlayer film for laminated glass capable of suppressing change in the sound insulating property of laminated glass in a relatively high temperature region. It is also an object of the present invention to provide a laminated glass prepared with the interlayer film for laminated glass.

### MEANS FOR SOLVING THE PROBLEMS

According to the present invention, the object is achieved by an interlayer film of claim 1 and a laminated glass of claim 14 as well as claim 15. Further, preferred embodiments are covered by the dependent claims. There is provided an interlayer film for laminated glass (in the present specification, "interlayer film for laminated glass" is sometimes abbreviated as "interlayer film") having a three or more-layer structure, in which when the interlayer film is sandwiched between two sheets of green glass having a thickness of 2 mm to obtain a laminated glass X with a size of 25 mm long x 300 mm wide, an absolute value of difference between a secondary resonance frequency of the laminated glass X before irradiation with xenon light and a secondary resonance frequency of the laminated glass X after irradiation with xenon light determined by the following xenon light irradiation test is 70 Hz or less, a loss factor at 20°C of the laminated glass X is 0.24 or more, and a solar transmittance of the laminated glass X is 50% or less.

Xenon light irradiation test: a secondary resonance frequency at 20°C of the laminated glass X is determined by a central exciting method in accordance with ISO16940. The laminated glass X is irradiated with xenon light of 190 W/m² for 20 minutes under the condition of 20°C. A secondary resonance frequency of the laminated glass X after irradiation with xenon light is determined by the central exciting method in accordance with ISO16940. An absolute value of difference between the secondary resonance frequency of the laminated glass X before irradiation with xenon light and the secondary resonance frequency of the laminated glass X after irradiation with xenon light is calculated.

In a specific aspect of the interlayer film according to the present invention, an absolute value of difference between the secondary resonance frequency of the laminated glass X before irradiation with xenon light and the secondary resonance frequency of the laminated glass X after irradiation with xenon light determined by the xenon light irradiation test is 20 Hz or more.

In a specific aspect of the interlayer film according to the present invention, when the laminated glass X is stored at 20°C for 56 days or more, a secondary resonance frequency at 20°C of the laminated glass X after storage determined by the central exciting method in accordance with ISO16940 is 650 Hz or less.

The interlayer film has a three or more-layer structure, and includes a first layer, a second layer disposed on a first surface side of the first layer, and a third layer disposed on a second surface side that is opposite to the first surface of the first layer, the second layer is a surface layer of the interlayer film, the third layer is a surface layer of the interlayer film, the first layer contains a thermoplastic resin, the second layer contains a thermoplastic resin, and the third layer contains a thermoplastic resin.

The first layer contains a plasticizer, the second layer contains a plasticizer, and the third layer contains a plasticizer.

In a specific aspect of the interlayer film according to the present invention, the first layer has a glass transition temperature of 5°C or less, the second layer has a glass transition temperature of 25°C or more, and the third layer has a glass transition temperature of 25°C or more.

The thermoplastic resin contained in the first layer is a polyvinyl acetal resin, the thermoplastic resin contained in the second layer is a polyvinyl acetal resin, and the thermoplastic resin contained in the third layer is a polyvinyl acetal resin.

In a specific aspect of the interlayer film according to the present invention, the polyvinyl acetal resin contained in the first layer has an acetylation degree of 10% by mole or less.

In a specific aspect of the interlayer film according to the present invention, the polyvinyl acetal resin contained in the first layer has an acetylation degree of 15% by mole or more.

In a specific aspect of the interlayer film according to the present invention, the polyvinyl acetal resin contained in the first layer is a polyvinyl butyral resin.

In a specific aspect of the interlayer film according to the present invention, when a butyralization degree of the polyvinyl butyral resin contained in the first layer is defined as B% by mole, and an acetylation degree is defined as A% by mole, the polyvinyl butyral resin contained in the first layer is a polyvinyl butyral resin satisfying the formula: B ≥ -0.88 × A + 78.6.

The interlayer film contains heat shielding particles.

The second layer contains heat shielding particles, and the third layer contains heat shielding particles.

In a specific aspect of the interlayer film according to the present invention, the second layer contains heat shielding particles, the third layer contains heat shielding particles, and a layer that is different from both the second layer and the third layer does not contain heat shielding particles.

The second layer contains heat shielding particles and at least one ingredient of a phthalocyanine compound, a naphthalocyanine compound, an anthracyanine compound and carbon black, and the third layer contains heat shielding particles and at least one ingredient of a phthalocyanine compound, a naphthalocyanine compound, an anthracyanine compound and carbon black.

In a specific aspect of the interlayer film according to the present invention, the ingredient contained in the second layer is pigment blue 15, pigment green 7, or carbon black, and the ingredient contained in the third layer is pigment blue 15, pigment green 7 or carbon black.

In a specific aspect of the interlayer film according to the present invention, the heat shielding particles contained in the second layer are tin-doped indium oxide particles, and the heat shielding particles contained in the third layer are tin-doped indium oxide particles.

In a specific aspect of the interlayer film according to the present invention, the interlayer film has one end and the other end being at the opposite side of the one end, and the other end has a thickness larger than a thickness of the one end.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

According to a broad aspect of the present invention, there is provided a laminated glass including a first lamination glass member, a second lamination glass member, and an interlayer film for laminated glass having a three or more-layer structure, the interlayer film for laminated glass being arranged between the first lamination glass member and the second lamination glass member, an absolute value of difference between a secondary resonance frequency of the laminated glass before irradiation with xenon light and a secondary resonance frequency of the laminated glass after irradiation with xenon light determined by the following xenon light irradiation test being 70 Hz or less, the laminated glass having a loss factor at 20°C of 0.24 or more, and a solar transmittance of 50% or less.

Xenon light irradiation test: a secondary resonance frequency at 20°C of a laminated glass is determined by the central exciting method in accordance with ISO16940. The laminated glass is irradiated with xenon light of 190 W/m² for 20 minutes under the condition of 20°C. A secondary resonance frequency of the laminated glass after irradiation with xenon light is determined by the central exciting method in accordance with ISO16940. An absolute value of difference between the secondary resonance frequency of the laminated glass before irradiation with xenon light and the secondary resonance frequency of the laminated glass after irradiation with xenon light is calculated.

In a specific aspect of the laminated glass according to the present invention, the first lamination glass member is green glass or heat ray absorbing plate glass, and the second lamination glass member is green glass or heat ray absorbing plate glass.

In a specific aspect of the laminated glass according to the present invention, the laminated glass has a solar transmittance of 48% or less.

### EFFECT OF THE INVENTION

The interlayer film for laminated glass according to the present invention has a three or more-layer structure. An interlayer film for laminated glass according to the present invention is sandwiched between two sheets of green glass having a thickness of 2 mm to obtain a laminated glass X having a size of 25 mm long and 300 mm wide. In the interlayer film for laminated glass according to the present invention, an absolute value of difference between the secondary resonance frequency of the laminated glass X before irradiation with xenon light and the secondary resonance frequency of the laminated glass X after irradiation with xenon light determined by the xenon light irradiation test is 70 Hz or less. In the interlayer film for laminated glass according to the present invention, the laminated glass X has a loss factor at 20°C of 0.24 or more. In the interlayer film for laminated glass according to the present invention, the laminated glass X has a solar transmittance of 50% or less. Since the interlayer film for laminated glass according to the present invention is provided with the above configuration, it is possible to suppress the change in sound insulating property of the laminated glass in a relatively high temperature region.

The laminated glass according to the present invention includes a first lamination glass member, a second lamination glass member, and an interlayer film for laminated glass having a three or more-layer structure, the interlayer film for laminated glass being interposed between the first lamination glass member and the second lamination glass member. In the laminated glass according to the present invention, an absolute value of difference between the secondary resonance frequency of the laminated glass before irradiation with xenon light and the secondary resonance frequency of the laminated glass after irradiation with xenon light determined by the xenon light irradiation test is 70 Hz or less. The laminated glass according to the present invention has a loss factor at 20°C of 0.24 or more, and a solar transmittance of 50% or less. Since the laminated glass according to the present invention is provided with the above configuration, it is possible to suppress the change in sound insulating property in a relatively high temperature region.

### BRIEF DESCRIPTION OF DRAWINGS

[Fig. 1] Fig. 1 is a sectional view schematically showing an interlayer film for laminated glass in accordance with a first embodiment.
[Fig. 2] Fig. 2 is a sectional view schematically showing an interlayer film for laminated glass in accordance with a second embodiment.
[Fig. 3] Fig. 3 is a sectional view schematically showing an example of laminated glass prepared with the interlayer film for laminated glass shown in Fig. 1.
[Fig. 4] Fig. 4 is a sectional view schematically showing an example of laminated glass prepared with the interlayer film for laminated glass shown in Fig. 2.

### MODE(S) FOR CARRYING OUT THE INVENTION

Hereinafter, the details of the present invention will be described.

### (Interlayer film for laminated glass)

The interlayer film for laminated glass according to the present invention (hereinafter, sometimes abbreviated as "interlayer film") has a one-layer structure or a two or more-layer structure.

An interlayer film according to the present invention is sandwiched between two sheets of green glass having a thickness of 2 mm to obtain a laminated glass X having a size of 25 mm long and 300 mm wide.

In the interlayer film according to the present invention, an absolute value of difference between a secondary resonance frequency of the laminated glass X before irradiation with xenon light and a secondary resonance frequency of the laminated glass X after irradiation with xenon light determined by the following xenon light irradiation test is 70 Hz or less. In the interlayer film according to the present invention, the laminated glass X has a loss factor at 20°C of 0.24 or more. In the interlayer film according to the present invention, the laminated glass X has a solar transmittance of 50% or less.

Xenon light irradiation test: a secondary resonance frequency at 20°C of the laminated glass X is determined by the central exciting method in accordance with ISO16940. The laminated glass X is irradiated with xenon light of 190 W/m² for 20 minutes under the condition of 20°C. A secondary resonance frequency of the laminated glass X after irradiation with xenon light is determined by the central exciting method in accordance with ISO16940. An absolute value of difference between the secondary resonance frequency of the laminated glass X before irradiation with xenon light and the secondary resonance frequency of the laminated glass X after irradiation with xenon light is calculated.

Since the interlayer film according to the present invention is provided with the above configuration, it is possible to suppress the change in sound insulating property of the laminated glass in a relatively high temperature region.

In a laminated glass using a conventional interlayer film for laminated glass, the sound insulating property (for example, sound insulating property at 2000 Hz to 5000 Hz) of the laminated glass can change in a relatively high temperature region (for example, 22°C to 40°C, especially about 25°C). For example, in a conventional interlayer film for laminated glass, by interlayer migration of the plasticizer contained in the interlayer or change in Young's modulus or the like of the resin layer associated with the temperature change, the sound insulating property of the laminated glass can change, resulting that the sound insulating property can not be enhanced depending on the temperature. Also, in a conventional interlayer film for laminated glass containing heat shielding particles, the temperature of the interlayer film tends to rise due to absorption of the solar light by the heat shielding particles, resulting that the sound insulating property of the laminated glass can change.

In contrast to this, since the interlayer film according to the present invention is provided with the above configuration, it is possible to suppress the change in sound insulating property of the laminated glass in a relatively high temperature region (for example, 22°C to 40°C, especially about 25°C). Therefore, in the interlayer film according to the present invention, it is possible to exert high sound insulating property even when a laminated glass prepared with the interlayer film is used in a relatively high temperature region. In the interlayer film according to the present invention, for example, the sound insulating property can be enhanced even in the environment in which the laminated glass is exposed to the solar light. Also, in the interlayer film according to the present invention, it is possible to enhance the heat shielding property of the laminated glass.

The interlayer film according to the present invention has a three or more-layer structure.

The interlayer film has a three or more-layer structure and includes a third layer in addition to a first layer and a second layer. It is preferred that the interlayer film include a third layer as a surface layer of the interlayer film. It is preferred that the third layer be a surface layer of the interlayer film. When the interlayer film includes the second layer and the third layer, the third layer is arranged on a second surface side opposite to the first surface of the first layer.

Other layer may be arranged between the first layer and the second layer, and between the first layer and the third layer.

An interlayer film according to the present invention is sandwiched between two sheets of green glass having a thickness of 2 mm to prepare a laminated glass X having a size of 25 mm long and 300 mm wide.

The laminated glass X is prepared to conduct the xenon light irradiation test, and to measure a loss factor, a secondary resonance frequency and a solar transmittance of the laminated glass **X.**

It is preferred that the laminated glass X be prepared in the following manner.

An interlayer film is sandwiched between two sheets of green glass having a thickness of 2 mm to obtain a laminate. The obtained laminate is put into a rubber bag and the inside thereof is degassed for 20 minutes at a degree of vacuum of 2.6 kPa, after which the laminate is transferred into an oven while being degassed, and furthermore, held in place at 90°C for 30 minutes and pressed under vacuum to preliminary press-bond the laminate. The preliminarily press-bonded laminate is subjected to press-bonding for 20 minutes under conditions of 135°C and a pressure of 1.2 MPa in an autoclave to obtain a laminated glass X having a size of 25 mm long and 300 mm wide.

The interlayer film in laminated glass may be delaminated from the lamination glass members to prepare the aforementioned laminated glass X.

In the present invention, the following xenon light irradiation test is conducted for the laminated glass X.

Xenon light irradiation test: a secondary resonance frequency at 20°C of the laminated glass X is determined by the central exciting method in accordance with ISO16940. The laminated glass X is irradiated with xenon light of 190 W/m² for 20 minutes under the condition of 20°C. A secondary resonance frequency of the laminated glass X after irradiation with xenon light is determined by the central exciting method in accordance with ISO16940. An absolute value of difference between the secondary resonance frequency of the laminated glass X before irradiation with xenon light and the secondary resonance frequency of the laminated glass X after irradiation with xenon light is calculated.

In the xenon light irradiation test of the laminated glass X, more specifically, the measurement is conducted in the following manner.
(1) A secondary resonance frequency at 20°C of the laminated glass X is determined by the central exciting method in accordance with ISO16940.
(2) The laminated glass X is irradiated with xenon light of 190 W/m² for 20 minutes under a calm condition of 20°C. As an apparatus for emitting xenon light, a solar simulator apparatus (for example, "HAL-320" available from Asahi Spectra Co., Ltd.) and the like can be recited. As an apparatus for measuring illuminance, an illuminometer (for example, "KEYSIGHT U1252B, sensor EKO Pyranometer ML-01" available from Keysight Technologies ) and the like are recited. The distance between the principal plane of the laminated glass X and a light source (xenon lamp or the like) is not particularly limited as long as the arrangement gives an illuminance of 190 W/m².
(3) A secondary resonance frequency of the laminated glass X after irradiation with xenon light is determined by the central exciting method in accordance with ISO16940. At this time, the secondary resonance frequency is determined within 2 minutes (preferably within 1 minute) after xenon light irradiation.
(4) An absolute value of difference between the secondary resonance frequency of the laminated glass X before irradiation with xenon light determined in the above (1) and the secondary resonance frequency of the laminated glass X after irradiation with xenon light determined in the above (3) is calculated.

From the viewpoint of exerting the effect of the present invention, the absolute value of difference between the secondary resonance frequency of the laminated glass X before irradiation with xenon light and the secondary resonance frequency of the laminated glass X after irradiation with xenon light is 70 Hz or less.

The absolute value of difference between the secondary resonance frequency of the laminated glass X before irradiation with xenon light and the secondary resonance frequency of the laminated glass X after irradiation with xenon light is preferably 1 Hz or more, more preferably 20 Hz or more, and is preferably 65 Hz or less, more preferably 45 Hz or less, further preferably 33 Hz or less. When the absolute value of the difference is the above lower limit or more and the above upper limit or less, it is possible to exert the effect of the present invention more effectively.

From the viewpoint of exerting the effect of the present invention more effectively, the secondary resonance frequency at 20°C of the laminated glass X before irradiation with xenon light is preferably 530 Hz or more, more preferably 560 Hz or more, and is preferably 680 Hz or less, more preferably 640 Hz or less, further preferably 599 Hz or less.

From the viewpoint of exerting the effect of the present invention more effectively, the secondary resonance frequency of the laminated glass X after irradiation with xenon light is preferably 500 Hz or more, more preferably 530 Hz or more, and is preferably 600 Hz or less, more preferably 565 Hz or less.

As a method for controlling the absolute value of difference and the secondary resonance frequency within the preferred ranges and the like, the following methods can be recited. (1) Method of adjusting content of plasticizer; In general, by reducing the content of the plasticizer, the secondary resonance frequency increases. (2) Method of controlling Young's modulus of first layer, second layer or third layer; In general, by increasing the Young's modulus, the secondary resonance frequency increases. (3) Method of controlling heat shielding performance of interlayer film; In general, by enhancing the heat shielding performance of the interlayer film, the absolute value of difference increases. (4) Method of controlling thickness of later-described second layer (surface layer) or third layer (surface layer); In general, by increasing the thickness of the second layer or the third layer, the secondary resonance frequency decreases. (5) Method of controlling thickness of later-described first layer (intermediate layer); In general, by increasing the thickness of the first layer, the secondary resonance frequency decreases. By appropriately combining these methods, it is possible to control the absolute value of difference and the secondary resonance frequency within the preferred ranges.

When the laminated glass X is stored at 20°C for 56 days or more, a secondary resonance frequency at 20°C of the laminated glass X after storage determined by the central exciting method in accordance with ISO16940 is preferably 530 Hz or more, more preferably 560 Hz or more, and is preferably 650 Hz or less, more preferably 600 Hz or less. When the secondary resonance frequency is the above lower limit or more and the above upper limit or less, it is possible to exert the effect of the present invention more effectively. It is preferred that the secondary resonance frequency be measured after storing the laminated glass X at 20°C for 56 days.

From the viewpoint of exerting the effect of the present invention, the loss factor at 20°C of the laminated glass X is 0.24 or more.

From the viewpoint of exerting the effect of the present invention further effectively, the loss factor at 20°C of the laminated glass X is preferably 0.25 or more, more preferably 0.26 or more, and is preferably 0.5 or less, more preferably 0.4 or less.

The loss factor at 20°C of the laminated glass X is measured by the central exciting method in accordance with ISO16940.

From the viewpoint of exerting the effect of the present invention and enhancing the heat shielding property, the solar transmittance of the laminated glass X is 50% or less.

From the viewpoint of exerting the effect of the present invention more effectively and further enhancing the heat shielding property, the solar transmittance of the laminated glass X is preferably 10% or more, more preferably 15% or more, and is preferably 48% or less, more preferably 44% or less.

The solar transmittance of the laminated glass X is measured in accordance with JIS R3106:1998 using a spectrophotometer (for example, "U-4100" available from Hitachi High-Tech Corporation).

Hereinafter, specific embodiments of the present invention will be described with reference to the drawings.

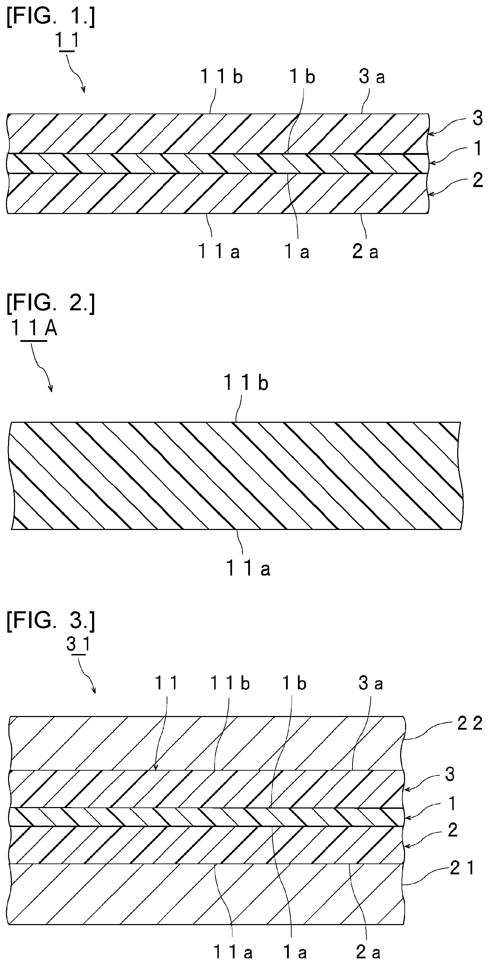

Fig. 1 is a sectional view schematically showing an interlayer film for laminated glass in accordance with a first embodiment.

An interlayer film 11 shown in Fig. 1 is a multilayered interlayer film having a two or more-layer structure. The interlayer film 11 is used for obtaining laminated glass. The interlayer film 11 is an interlayer film for laminated glass. The interlayer film 11 includes a first layer 1, a second layer 2 and a third layer **3.** The interlayer film 11 has a three-layer structure. The second layer 2 is arranged on a first surface 1a of the first layer 1 to be layered thereon. The third layer 3 is arranged on a second surface 1b at the opposite side of the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the interlayer film 11 has a multilayer structure (second layer 2/first layer 1/third layer 3) in which the second layer 2, the first layer 1, and the third layer 3 are layered in this order.

In this connection, other layers may be arranged between the second layer 2 and the first layer 1 and between the first layer 1 and the third layer 3, respectively. It is preferred that the second layer 2 and the first layer 1, and the first layer 1 and the third layer 3 be directly layered, respectively. Examples of other layers include a layer containing polyethylene terephthalate and the like.

Fig. 2 is a sectional view schematically showing an interlayer film for laminated glass in accordance with a second embodiment.

An interlayer film 11A shown in Fig. 2 is a single-layered interlayer film having a one-layer structure. The interlayer film 11A is a first layer. The interlayer film 11A is used for obtaining laminated glass. The interlayer film 11A is an interlayer film for laminated glass.

From the viewpoint of further enhancing the sound insulating property of the laminated glass, the glass transition temperature of the first layer is preferably - 10°C or more, more preferably -6°C or more, and is preferably 5°C or less, more preferably 0°C or less.

From the viewpoint of further enhancing the sound insulating property of the laminated glass, the glass transition temperature of the second layer is preferably 25°C or more, more preferably 28°C or more, and is preferably 45°C or less, more preferably 35°C or less.

From the viewpoint of further enhancing the sound insulating property of the laminated glass, the glass transition temperature of the third layer is preferably 25°C or more, more preferably 28°C or more, and is preferably 45°C or less, more preferably 35°C or less.

The glass transition temperature is determined by measurement of viscoelasticity. The viscoelasticity measurement is conducted specifically in the following manner.

The test piece is stored for 12 hours in an environment of 23 ± 2°C temperature, 25 ± 5% humidity. Then, viscoelasticity is measured using a viscoelasticity measuring device "ARES-G2" available from TA Instruments. A parallel plate with a diameter of 8 mm is used as a jig, and the measurement is performed in a shearing mode under the condition in which the temperature is decreased from 100°C to -20°C at a temperature decreasing rate of 3°C/minute and under the condition of a frequency of 1 Hz and a strain of 1%.

The viscoelasticity measurement may be conducted using an interlayer film itself. In this case, a peak of tanδ and the like originated in the first layer, second layer and the third layer may be read from the measurement result. For an interlayer film having a two or more-layer structure, the layers may be delaminated, and the glass transition temperature of the layer to be measured may be measured. In the case of a laminated glass, after cooling the laminated glass with liquid nitrogen or the like, the lamination glass member and the interlayer film are delaminated, and the viscoelasticity measurement may be conducted using the delaminated interlayer film.

Hereinafter, the details of the interlayer film according to the present invention, the first layer, the second layer and the third layer, and each ingredient used in the interlayer film will be described.

### (Thermoplastic resin)

It is preferred that the interlayer film contain a thermoplastic resin (hereinafter, sometimes described as a thermoplastic resin (0)). Examples of the thermoplastic resin include a polyvinyl acetate resin, a polyester resin, a polyvinyl acetal resin, a vinyl acetate resin, a polystyrene resin, an ethylene-vinyl acetate copolymer resin, an ethylene-acrylic acid copolymer resin, a polyurethane resin, an ionomer resin, a polyvinyl alcohol resin, an polyolefin resin such as aliphatic polyolefin, and a (meth)acrylic resin (polymer having a (meth)acryloyl group) and the like. The polyoxymethylene (or polyacetal) resin is included in the polyvinyl acetal resin. Thermoplastic resins other than these may be used as the thermoplastic resin. The thermoplastic resin may be a thermoplastic elastomer.

It is preferred that the interlayer film contain a polyvinyl acetal resin (hereinafter, sometimes described as a polyvinyl acetal resin (0)) as the thermoplastic resin (0). It is preferred that the thermoplastic resin (0) contained in the interlayer film be a polyvinyl acetal resin (0). It is preferred that the first layer (including a single-layered interlayer film) contain a thermoplastic resin (hereinafter, sometimes described as a thermoplastic resin (1)). It is preferred that the first layer contain a polyvinyl acetal resin (hereinafter, sometimes described as a polyvinyl acetal resin (1)) as the thermoplastic resin (1). It is preferred that the thermoplastic resin (1) contained in the first layer be the polyvinyl acetal resin (1). It is preferred that the second layer contain a thermoplastic resin (hereinafter, sometimes described as a thermoplastic resin (2)). It is preferred that the second layer contain a polyvinyl acetal resin (hereinafter, sometimes described as a polyvinyl acetal resin (2)) as the thermoplastic resin (2). It is preferred that the thermoplastic resin (2) contained in the second layer be the polyvinyl acetal resin (2). It is preferred that the third layer contain a thermoplastic resin (hereinafter, sometimes described as a thermoplastic resin (3)). It is preferred that the third layer contain a polyvinyl acetal resin (hereinafter, sometimes described as a polyvinyl acetal resin (3)) as the thermoplastic resin (3). It is preferred that the thermoplastic resin (3) contained in the third layer be the polyvinyl acetal resin (3). The thermoplastic resin (1), the thermoplastic resin (2), and the thermoplastic resin (3) may be the same or different from one another. For still higher sound insulating property, it is preferred that the thermoplastic resin (1) be different from the thermoplastic resin (2) and the thermoplastic resin (3). Each of the polyvinyl acetal resin (1), the polyvinyl acetal resin (2) and the polyvinyl acetal resin (3) may be the same or different from one another. For still higher sound insulating property, it is preferred that the polyvinyl acetal resin (1) be different from the polyvinyl acetal resin (2) and the polyvinyl acetal resin (3). One kind of each of the thermoplastic resin (0), the thermoplastic resin (1), the thermoplastic resin (2), and the thermoplastic resin (3) may be used alone and two or more kinds thereof may be used in combination. One kind of each of the polyvinyl acetal resin (0), the polyvinyl acetal resin (1), the polyvinyl acetal resin (2), and the polyvinyl acetal resin (3) may be used alone and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a polyvinyl alcohol resin, an ionomer resin, and the like. Thermoplastic resins other than these may be used.

It is preferred that the thermoplastic resin be a polyvinyl acetal resin. By using a polyvinyl acetal resin and a plasticizer together, the adhesive force of the layer containing the polyvinyl acetal resin and the plasticizer to a lamination glass member or another layer is further enhanced.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is preferably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde, or isobutyraldehyde, and further preferably n-butyraldehyde. One kind of the aldehyde may be used alone, and two or more kinds thereof may be used in combination.

It is preferred that the interlayer film contain a polyvinyl butyral resin as the thermoplastic resin (0). It is preferred that the interlayer film contain a polyvinyl butyral resin as the polyvinyl acetal resin (0). It is preferred that the thermoplastic resin (0) contained in the interlayer film be a polyvinyl butyral resin. It is preferred that the first layer contain a polyvinyl butyral resin as the thermoplastic resin (1). It is preferred that the first layer contain a polyvinyl butyral resin as the polyvinyl acetal resin (1). It is preferred that the thermoplastic resin (1) contained in the first layer be a polyvinyl butyral resin. It is preferred that the second layer contain a polyvinyl butyral resin as the thermoplastic resin (2). It is preferred that the second layer contain a polyvinyl butyral resin as the polyvinyl acetal resin (2). It is preferred that the thermoplastic resin (2) contained in the second layer be a polyvinyl butyral resin. It is preferred that the third layer contain a polyvinyl butyral resin as the thermoplastic resin (3). It is preferred that the third layer contain a polyvinyl butyral resin as the polyvinyl acetal resin (3). It is preferred that the thermoplastic resin (3) contained in the third layer be a polyvinyl butyral resin. As each polyvinyl butyral resin contained in the interlayer film, the first layer, the second layer and the third layer, only one kind of polyvinyl butyral resin may be used, or a combination of two or more kinds of polyvinyl butyral resins may be used.

A content of the hydroxyl group (the amount of hydroxyl groups) of the polyvinyl acetal resin (0) is preferably 15% by mole or more, more preferably 18% by mole or more and is preferably 40% by mole or less, more preferably 35% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

A content of the hydroxyl group (the amount of hydroxyl groups) of the polyvinyl acetal resin (1) is preferably 10% by mole or more, more preferably 15% by mole or more, further preferably 17% by mole or more and is preferably 25% by mole or less, more preferably 20% by mole or less, further preferably 19% by mole or less, especially preferably 18% by mole or less. When the content of the hydroxyl group is the above lower limit or more, the mechanical strength of the interlayer film is further enhanced. In particular, when the content of the hydroxyl group of the polyvinyl acetal resin (1) is 15% by mole or more, the reaction efficiency is high and the productivity is excellent, whereas when the content is 25% by mole or less, the sound insulating property of laminated glass is further enhanced. Moreover, when the content of the hydroxyl group is the above upper limit or less, the flexibility of the interlayer film is enhanced and the handling of the interlayer film is facilitated.

Each of the contents of the hydroxyl group of the polyvinyl acetal resin (2) and the polyvinyl acetal resin (3) is preferably 25% by mole or more, more preferably 28% by mole or more, more preferably 30% by mole or more, still more preferably 31.5% by mole or more, further preferably 32% by mole or more, especially preferably 33% by mole or more. Each of the contents of the hydroxyl group of the polyvinyl acetal resin (2) and the polyvinyl acetal resin (3) is preferably 38% by mole or less, more preferably 37% by mole or less, further preferably 36.5% by mole or less, especially preferably 36% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

From the viewpoint of further heightening the sound insulating property, it is preferred that the content of the hydroxyl group of the polyvinyl acetal resin (1) be lower than the content of the hydroxyl group of the polyvinyl acetal resin (2). From the viewpoint of further enhancing the sound insulating property, it is preferred that the content of the hydroxyl group of the polyvinyl acetal resin (1) be lower than the content of the hydroxyl group of the polyvinyl acetal resin (3). From the viewpoint of still further enhancing the sound insulating property, the absolute value of difference between the content of the hydroxyl group of the polyvinyl acetal resin (1) and the content of the hydroxyl group of the polyvinyl acetal resin (2) is preferably 1% by mole or more, more preferably 5% by mole or more, further preferably 9% by mole or more, especially preferably 10% by mole or more, most preferably 12% by mole or more. From the viewpoint of still further enhancing the sound insulating property, the absolute value of difference between the content of the hydroxyl group of the polyvinyl acetal resin (1) and the content of the hydroxyl group of the polyvinyl acetal resin (3) is preferably 1% by mole or more, more preferably 5% by mole or more, further preferably 9% by mole or more, especially preferably 10% by mole or more, most preferably 12% by mole or more. The absolute value of difference between the content of the hydroxyl group of the polyvinyl acetal resin (1) and the content of the hydroxyl group of the polyvinyl acetal resin (2) and the absolute value of difference between the content of the hydroxyl group of the polyvinyl acetal resin (1) and the content of the hydroxyl group of the polyvinyl acetal resin (3) are preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree (the amount of acetyl groups) of the polyvinyl acetal resin (0) is preferably 0.1% by mole or more, more preferably 0.3% by mole or more, further preferably 0.5% by mole or more and is preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the above upper limit or less, the moisture resistance of the interlayer film and laminated glass is enhanced.

It is preferred that the acetylation degree (acetyl group amount) of the polyvinyl acetal resin (1) be 10% by mole or less, and 15% by mole or more is also preferred. When the acetylation degree of the polyvinyl acetal resin (1) is 10% by mole or less, the acetylation degree of the polyvinyl acetal resin (1) is preferably 0.1% by mole or more, more preferably 1.1% by mole or more, and is preferably 9% by mole or less, more preferably 7% by mole or less. When the acetylation degree of the polyvinyl acetal resin (1) is 15% by mole or more, the acetylation degree of the polyvinyl acetal resin (1) is preferably 16% by mole or more, more preferably 17% by mole or more, and is preferably 25% by mole or less, more preferably 23% by mole or less, further preferably 19% by mole or less. When the acetylation degree is the above lower limit or more, the compatibility between the polyvinyl acetal resin and a plasticizer is enhanced. When the acetylation degree is the above upper limit or less, the moisture resistance of the interlayer film and laminated glass is enhanced. Also, when the acetylation degree of the polyvinyl acetal resin (1) is the above lower limit or more and the above upper limit or less, the absolute value of difference and the secondary resonance frequency can be easily controlled within the preferred ranges, so that the effect of the present invention can be exerted more effectively. Also, when the acetylation degree of the polyvinyl acetal resin (1) is 0.1% by mole or more and is 25% by mole or less, the resulting laminated glass is excellent in penetration resistance. The acetylation degree of the polyvinyl acetal resin (1) may be 10% by mole or less or may be 15% by mole or more.

The acetylation degree of each of the polyvinyl acetal resin (2) and the polyvinyl acetal resin (3) is preferably 0.01% by mole or more, more preferably 0.5% by mole or more and is preferably 10% by mole or less, more preferably 2% by mole or less. When the acetylation degree is the above lower limit or more, the compatibility between the polyvinyl acetal resin and a plasticizer is enhanced. When the acetylation degree is the above upper limit or less, the moisture resistance of the interlayer film and laminated glass is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (0) (the butyralization degree in the case of a polyvinyl butyral resin) is preferably 60% by mole or more, more preferably 63% by mole or more and is preferably 85% by mole or less, more preferably 75% by mole or less, further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of the polyvinyl acetal resin (1) (the butyralization degree in the case of a polyvinyl butyral resin) is preferably 47% by mole or more, more preferably 60% by mole or more, further preferably 65% by mole or more, and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened. Also, when the acetalization degree of the polyvinyl acetal resin (1) (butyralization degree in the case of polyvinyl butyral resin) is the above lower limit or more and the above upper limit or less, the absolute value of difference and the secondary resonance frequency can be easily controlled within the preferred ranges, so that the effect of the present invention can be exerted more effectively.

When an acetalization degree of the polyvinyl acetal resin (1) is defined as B% by mole, and an acetylation degree is defined as A% by mole, it is preferred that the polyvinyl acetal resin (1) be a polyvinyl acetal resin satisfying the formula: B ≥ -0.88 × A + 78.6. In this case, the absolute value of difference and the secondary resonance frequency can be easily controlled within the preferred ranges, so that the effect of the present invention can be exerted more effectively.

In a case where the polyvinyl acetal resin (1) is a polyvinyl butyral resin, when a butyralization degree of the polyvinyl butyral resin is defined as B% by mole, and an acetylation degree is defined as A% by mole, it is especially preferred that the polyvinyl butyral resin be a polyvinyl butyral resin satisfying the formula: B ≥ -0.88 × A + 78.6. In this case, the absolute value of difference and the secondary resonance frequency can be controlled within the preferred ranges more easily, so that the effect of the present invention can be exerted still more effectively.

The acetalization degree of each of the polyvinyl acetal resin (2) and the polyvinyl acetal resin (3) (the butyralization degree in the case of a polyvinyl butyral resin) is preferably 55% by mole or more, more preferably 60% by mole or more and is preferably 75% by mole or less, more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The value represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the thermoplastic resin contained in the interlayer film, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. It is preferred that the main ingredient (50% by weight or more) of the thermoplastic resin of the interlayer film be a polyvinyl acetal resin.

### (Plasticizer)

It is preferred that the interlayer film contain a plasticizer. It is preferred that the first layer (including a single-layered interlayer film) contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By the use of the plasticizer or by using a polyvinyl acetal resin and a plasticizer together, the impact resistance and the penetration resistance are further improved, and the adhesive force of the layer containing the polyvinyl acetal resin and the plasticizer to a lamination glass member or another layer is moderately increased. The plasticizer is not particularly limited. The plasticizer (1), the plasticizer (2) and the plasticizer (3) may be the same or different from one another. One kind of each of the plasticizer (1), the plasticizer (2) and the plasticizer (3) may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

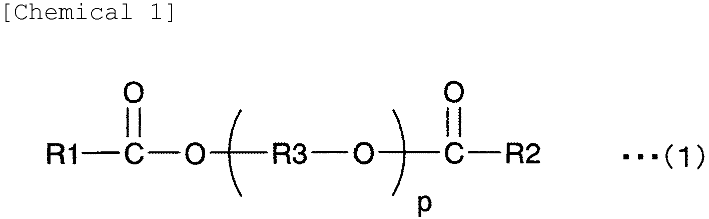

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol **di-2-**ethylpropanoate. It is more preferred that the plasticizer include triethylene glycol di-2-ethylhexanoate or triethylene glycol di-2-ethylbutyrate, and it is further preferred that the plasticizer include triethylene glycol di-2-ethylhexanoate.

In the first layer, the content of the plasticizer (1) per 100 parts by weight of the thermoplastic resin (1) (100 parts by weight of polyvinyl acetal resin (1) when the thermoplastic resin (1) is the polyvinyl acetal resin (1)) is referred to as a content (1). The content (1) is preferably 68 parts by weight or more, more preferably 72 parts by weight or more, further preferably 75 parts by weight or more, and is preferably 90 parts by weight or less, more preferably 86 parts by weight or less, further preferably 84 parts by weight or less, especially preferably 82 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced. Also, when the content (1) is the above lower limit or more and the above upper limit or less, the absolute value of difference and the secondary resonance frequency can be easily controlled within the preferred ranges, so that the effect of the present invention can be exerted more effectively.

In the second layer, the content of the plasticizer (2) per 100 parts by weight of the thermoplastic resin (2) (100 parts by weight of polyvinyl acetal resin (2) when the thermoplastic resin (2) is the polyvinyl acetal resin (2)) is referred to as a content (2). The content (2) is preferably 10 parts by weight or more, more preferably 20 parts by weight or more, further preferably 30 parts by weight or more, especially preferably 35 parts by weight or more, and is preferably 41 parts by weight or less, more preferably 39 parts by weight or less, further preferably 38 parts by weight or less, especially preferably 37 parts by weight or less. When the content (2) is the above lower limit or more, the flexibility of the interlayer film is enhanced and the handling of the interlayer film is facilitated. When the content (2) is the above upper limit or less, the flexural rigidity is further enhanced.

In the third layer, the content of the plasticizer (3) per 100 parts by weight of the thermoplastic resin (3) (100 parts by weight of polyvinyl acetal resin (3) when the thermoplastic resin (3) is the polyvinyl acetal resin (3)) is referred to as a content (3). The content (3) is preferably 10 parts by weight or more, more preferably 20 parts by weight or more, further preferably 30 parts by weight or more, especially preferably 35 parts by weight or more, and is preferably 41 parts by weight or less, more preferably 39 parts by weight or less, further preferably 38 parts by weight or less, especially preferably 37 parts by weight or less. When the content (3) is the above lower limit or more, the flexibility of the interlayer film is enhanced and the handling of the interlayer film is facilitated. When the content (3) is the above upper limit or less, the flexural rigidity is further enhanced.

The content (1) and the content (2) may be the same as or different from each other. The content (1) and the content (3) may be the same as or different from each other. From the viewpoint of enhancing the sound insulating property of laminated glass, it is preferred that the content (1) and the content (2) be the same or the content (1) be larger than the content (2), and it is more preferred that the content (1) be larger than the content (2). From the viewpoint of enhancing the sound insulating property of laminated glass, it is preferred that the content (1) and the content (3) be the same or the content (1) be larger than the content (3), and it is more preferred that the content (1) be larger than the content (3).

From the viewpoint of further enhancing the sound insulating property of laminated glass, each of the absolute value of difference between the content (2) and the content (1) and the absolute value of difference between the content (3) and the content (1) is preferably 10 parts by weight or more, more preferably 15 parts by weight or more, further preferably 20 parts by weight or more. Each of the absolute value of difference between the content (2) and the content (1) and the absolute value of difference between the content (3) and the content (1) is preferably 80 parts by weight or less, more preferably 75 parts by weight or less, further preferably 70 parts by weight or less.

### (Heat shielding substance)

It is preferred that the interlayer film contain a heat shielding substance. It is preferred that the first layer (including a single-layered interlayer film) contain the heat shielding substance. It is preferred that the second layer contain a heat shielding substance. It is preferred that the third layer contain a heat shielding substance. One kind of the heat shielding substance may be used alone, and two or more kinds thereof may be used in combination. The heat shielding substance can also correspond to the later-described coloring agent.

It is preferred that the heat shielding substance contain at least one kind of Ingredient X among a phthalocyanine compound, a naphthalocyanine compound, an anthracyanine compound and carbon black or contain heat shielding particles. In this case, the Ingredient X may exert a function as a coloring agent. From the viewpoint of further enhancing the heat shielding property, it is preferred that the heat shielding substance contain the Ingredient X and the heat shielding particles. The heat shielding substance may contain at least one kind of Ingredient X1 among a phthalocyanine compound, a naphthalocyanine compound, and an anthracyanine compound or contain heat shielding particles. From the viewpoint of further enhancing the heat shielding property, it is preferred that the heat shielding substance contain the Ingredient X1 and heat shielding particles. The heat shielding substance may contain carbon black or may contain heat shielding particles. From the viewpoint of further enhancing the heat shielding property, it is preferred that the heat shielding substance contain carbon black and heat shielding particles.

### Ingredient X:

It is preferred that the interlayer film include at least one kind of Ingredient X among a phthalocyanine compound, a naphthalocyanine compound, an anthracyanine compound, and carbon black. It is preferred that the first layer contain the Ingredient X. It is preferred that the second layer contain the Ingredient X. It is preferred that the third layer contain the Ingredient X. The Ingredient X is a heat shielding substance. One kind of the Ingredient X may be used alone, and two or more kinds thereof may be used in combination.

The Ingredient X is not particularly limited. As the Ingredient X, conventionally known phthalocyanine compound, naphthalocyanine compound, anthracyanine compound and carbon black can be used.

From the viewpoint of further enhancing the heat shielding property of laminated glass, it is preferred that the Ingredient X be at least one kind selected from the group consisting of phthalocyanine, a derivative of phthalocyanine, naphthalocyanine, a derivative of naphthalocyanine, and carbon black, and it is more preferred that the Ingredient X be at least one kind among phthalocyanine and a derivative of phthalocyanine.

From the viewpoints of effectively enhancing the heat shielding property and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding property thereof, it is preferred that the Ingredient X have a structural unit in which an oxygen atom is bonded to a vanadium atom.

From the viewpoint of further enhancing the heat shielding property of laminated glass, it is preferred that the Ingredient X be pigment blue 15, pigment green 7 or carbon black. Pigment blue 15 and pigment green 7 are phthalocyanine compounds containing copper atoms.

In 100% by weight of the layer containing the Ingredient X (the first layer, the second layer, or the third layer), the content of the Ingredient X is preferably 0.001% by weight or more, more preferably 0.005% by weight or more, further preferably 0.01% by weight or more, especially preferably 0.02% by weight or more. In 100% by weight of the layer containing the Ingredient X (the first layer, the second layer, or the third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding property is sufficiently enhanced and the visible light transmittance is sufficiently enhanced. For example, it is possible to make the visible light transmittance 70% or more.

In 100% by weight of the layer containing the Ingredient X1 (the first layer, the second layer, or the third layer), the content of the Ingredient X1 is preferably 0.001% by weight or more, more preferably 0.005% by weight or more, further preferably 0.01% by weight or more, especially preferably 0.02% by weight or more. In 100% by weight of the layer containing the Ingredient X1 (the first layer, the second layer, or the third layer), the content of the Ingredient X1 is preferably 0.2% by weight or less, more preferably 0.1% by weight or less, further preferably 0.05% by weight or less, especially preferably 0.04% by weight or less. When the content of the Ingredient X1 is the above lower limit or more and the above upper limit or less, the heat shielding property is sufficiently enhanced and the visible light transmittance is sufficiently enhanced. For example, it is possible to make the visible light transmittance 70% or more.

In 100% by weight of the layer containing the carbon black (the first layer, the second layer, or the third layer), the content of the carbon black is preferably 0.001% by weight or more, more preferably 0.005% by weight or more, further preferably 0.01% by weight or more, especially preferably 0.02% by weight or more. In 100% by weight of the layer containing the carbon black (the first layer, the second layer, or the third layer), the content of the carbon black is preferably 0.2% by weight or less, more preferably 0.1% by weight or less, further preferably 0.05% by weight or less, especially preferably 0.04% by weight or less. When the content of the carbon black is the above lower limit or more and the above upper limit or less, the heat shielding property is sufficiently enhanced and the visible light transmittance is sufficiently enhanced. For example, it is possible to make the visible light transmittance 70% or more.

### Heat shielding particles:

It is preferred that the interlayer film contain heat shielding particles. It is preferred that the first layer (including a single-layered interlayer film) contain the heat shielding particles. It is preferred that the second layer contain the heat shielding particles. It is preferred that the third layer contain the heat shielding particles. It is also preferred that the second layer contain the heat shielding particles, the third layer contain the heat shielding particles, and a layer that is different from both the second layer and the third layer do not contain heat shielding particles. The heat shielding particles are a heat shielding substance. By the use of heat shielding particles, infrared rays (heat rays) can be effectively cut off. One kind of the heat shielding particles may be used alone, and two or more kinds thereof may be used in combination.

By containing the heat shielding particles, the absolute value of difference and the secondary resonance frequency can be easily controlled within the preferred ranges, so that the effect of the present invention can be exerted more effectively.

From the viewpoint of further enhancing the heat shielding property of laminated glass, it is more preferred that the heat shielding particles be metal oxide particles. It is preferred that the heat shielding particles be particles of a metal oxide (metal oxide particles).

Infrared rays with a wavelength of 780 nm or more which is longer than that of visible light have a smaller energy amount than ultraviolet rays. However, infrared rays have large thermal action, and are released as heat when the infrared rays are absorbed into a substance. Accordingly, infrared rays are generally called heat rays. By the use of the heat shielding particles, infrared rays (heat rays) can be effectively cut off. In this connection, the heat shielding particles mean particles capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding property of the laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding property of the laminated glass, cesium-doped tungsten oxide particles are especially preferred. From the viewpoint of further enhancing the heat shielding property of the laminated glass, it is preferred that the cesium-doped tungsten oxide particles be tungsten oxide particles represented by the formula: Cs_{0.33}WO₃.

The average particle diameter of the heat shielding particles is preferably 0.01 µm or more, more preferably 0.02 µm or more, and is preferably 0.1 µm or less, more preferably 0.05 µm or less. When the average particle diameter is the above lower limit or more, the heat ray shielding property is sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

From the viewpoint of further enhancing the heat shielding property of laminated glass, it is preferred that the second layer contain the heat shielding particles and the Ingredient X, and the third layer contain the heat shielding particles and the Ingredient X.

In 100% by weight of the layer containing the heat shielding particles (the first layer, the second layer, or the third layer), the content of the heat shielding particles is preferably 0.01% by weight or more, more preferably 0.1% by weight or more, further preferably 1% by weight or more, especially preferably 1.5% by weight or more. In 100% by weight of the layer containing the heat shielding particles (the first layer, the second layer, or the third layer), the content of the heat shielding particles is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

### (Coloring agent)

It is preferred that the interlayer film contain a coloring agent. By coloring the interlayer film with a coloring agent, it is possible to enhance the design quality or enhance privacy protection. By coloring the interlayer film with a coloring agent, it is possible to further improve the heat shielding performance and lower the solar transmittance. One kind of the coloring agent may be used alone and two or more kinds thereof may be used in combination. The coloring agent can also correspond to the above-described heat shielding substance.

From the viewpoint of effectively controlling excessive color irregularity, it is preferred that the first layer (including a single-layered interlayer film) contain a coloring agent. It is preferred that the first layer be a colored layer. From the viewpoint of effectively controlling excessive color irregularity, it is preferred that the intermediate layer of the interlayer film contain a coloring agent, and be a colored layer. When the first layer contains a coloring agent, the second layer may contain or need not contain a coloring agent. When the first layer is a colored layer, the second layer may be or need not be a colored layer. When the first layer contains a coloring agent, the third layer may contain or need not contain a coloring agent. When the first layer is a colored layer, the third layer may be or need not be a colored layer. The surface layer of the interlayer film may contain or need not contain a coloring agent, and may be or need not be a colored layer.

From the viewpoint of further enhancing the heat shielding property, and lowering the solar transmittance, it is preferred that the second layer contain a coloring agent, and the third layer contain a coloring agent. From the viewpoint of further enhancing the heat shielding property, and lowering the solar transmittance, it is preferred that the second layer be a colored layer, and the third layer be a colored layer. In these cases, the first layer may contain or need not contain a coloring agent, and may be or need not be a colored layer.

Examples of the coloring agent include a pigment, a dye and the like.

Which of dyes and pigments the coloring agent is categorized in can be discriminated according to the classification by the color index.

In the present specification, for coloring agents and the like that are not described in the color index, "pigment" and "dye" may be defined as follows. A polyvinyl butyral resin (the polymerization degree of polyvinyl alcohol of 1700, the content of the hydroxyl group of 30% by mole, the acetylation degree of 1% by mole, the butyralization degree of 69% by mole) is prepared. One hundred parts by weight of the polyvinyl butyral resin, 40 parts by weight of triethylene glycol di-2-ethylhexanoate (3GO), and a coloring agent in an amount of 0.015% by weight, relative to 100% by weight of the total amount of the polyvinyl butyral resin, 3GO and the coloring agent are kneaded and extruded to give a resin film (single layer) having a thickness of 760 µm. Laminated glass is prepared with the resin film, and two sheets of clear glass (2.5 mm thick) having a visible light transmittance of 90% as measured in accordance with JIS R3106:1998, and when the obtained laminated glass has a haze value of 0.35% or more, the coloring agent is determined as a pigment. The coloring agent having a haze value of less than 0.35% is determined as a dye.

The pigment may be an organic pigment and may be an inorganic pigment. The organic pigment may be an organic pigment having a metal atom, and may be an organic pigment not having a metal atom. One kind of the pigment may be used alone, and two or more kinds thereof may be used in combination.

Examples of the organic pigment include a phthalocyanine compound, a quinacridone compound, an azo compound, a pentaphene compound, a dioxazine compound, a perylene compound, an indole compound and a dioxazine compound.

It is preferred that the color tone of the organic pigment be yellow, orange, red, violet, blue or green.

Examples of the inorganic pigment include carbon black, and iron oxide, zinc oxide and titanium oxide, and the like.

It is preferred that the interlayer film contain a phthalocyanine compound, a quinacridone compound, an azo compound, a pentaphene compound, a dioxazine compound, a perylene compound, an indole compound or carbon black as the pigment. The interlayer film may contain a phthalocyanine compound, or may contain a quinacridone compound, a perylene compound or an indole compound, or may contain carbon black as the pigment.

Examples of the dye include a pyrene-based dye, an amino ketone-based dye, an anthraquinone-based dye, and an azo-based dye, and the like. One kind of the dye may be used alone, and two or more kinds thereof may be used in combination.

Examples of the pyrene-based dye include Solvent Green 5 (CAS79869-59-3) and Solvent Green 7 (CAS6358-69-6), and the like.

Examples of the aminoketone-based dye include Solvent Yellow 98 (CAS12671-74-8), Solvent Yellow 85 (CAS12271-01-1) and Solvent Red 179 (CAS8910-94-5), and Solvent Red 135 (CAS71902-17-5), and the like.

Examples of the anthraquinone-based dye include Solvent Yellow 163 (CAS13676091-0), Solvent Red 207 (CAS15958-69-6), Disperse Red 92 (CAS12236-11-2), Solvent Violet 13 (CAS81-48-1), Disperse Violet 31 (CAS6408-72-6), Solvent Blue 97 (CAS61969-44-6), Solvent Blue 45 (CAS37229-23-5), Solvent Blue 104 (CAS116-75-6) and Disperse Blue 214 (CAS104491-84-1), and the like.

Examples of the azo-based dye include Solvent Yellow30 (CAS3321-10-4), Solvent Red 164 (CAS70956-30-8), and Disperse Blue 146 (CAS88650-91-3), and the like.

In 100% by weight of the colored layer containing the coloring agent (the first layer, the second layer, or the third layer), the content of the coloring agent is preferably 0.0001% by weight or more, more preferably 0.0003% by weight or more, further preferably 0.0005% by weight or more, especially preferably 0.0008% by weight or more. In 100% by weight of the colored layer containing the coloring agent (the first layer, the second layer or the third layer), the content of the coloring agent is preferably 3% by weight or less, more preferably 2% by weight or less, further preferably 1% by weight or less, especially preferably 0.5% by weight or less. When the content of the coloring agent is the above lower limit or more and the above upper limit or less, it is possible to color favorably, and further enhance the heat shielding property.

### (Metal salt)

It is preferred that the interlayer film contain at least one kind of metal salt (hereinafter, sometimes described as Metal salt M) among alkali metal salts and alkaline earth metal salts. It is preferred that the first layer (including a single-layered interlayer film) contain the Metal salt M. It is preferred that the second layer contain the Metal salt M. It is preferred that the third layer contain the Metal salt M. The alkali earth metal means six metals of Be, Mg, Ca, Sr, Ba, and Ra. Use of the Metal salt M makes it easy to control the adhesivity between the interlayer film and a lamination glass member such as a glass plate or the adhesivity between layers in the interlayer film. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt contained in the interlayer film contain at least one kind of metal between K and Mg.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in a layer containing the Metal salt M (the first layer, the second layer or the third layer) is preferably 5 ppm or more, more preferably 10 ppm or more, further preferably 20 ppm or more, preferably 300 ppm or less, more preferably 250 ppm or less and further preferably 200 ppm or less. When the total of the contents of Mg and K is the above lower limit or more and the above upper limit or less, the adhesivity between the interlayer film and a glass plate or the adhesivity between layers in the interlayer film can be controlled more favorably.

### (Ultraviolet ray screening agent)

It is preferred that the interlayer film contain an ultraviolet ray screening agent. It is preferred that the first layer (including a single-layered interlayer film) contain a ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazin-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the layer containing the ultraviolet ray screening agent (the first layer, the second layer, or the third layer), the content of the ultraviolet ray screening agent is preferably 0.1% by weight or more, more preferably 0.2% by weight or more, further preferably 0.3% by weight or more, especially preferably 0.5% by weight or more. In 100% by weight of the layer containing the ultraviolet ray screening agent (the first layer, the second layer, or the third layer), the content of the ultraviolet ray screening agent is preferably 2.5% by weight or less, more preferably 2% by weight or less, further preferably 1% by weight or less, especially preferably 0.8% by weight or less. When the content of the ultraviolet ray screening agent is the above lower limit or more and the above upper limit or less, deterioration in visible light transmittance after a lapse of a period of time can be further suppressed. In particular, by setting the content of the ultraviolet ray screening agent to be 0.2% by weight or more in 100% by weight of the layer containing the ultraviolet ray screening agent, with regard to the interlayer film and laminated glass, the lowering in visible light transmittance thereof after a lapse of a period of time can be significantly suppressed.

### (Oxidation inhibitor)

It is preferred that the interlayer film contain an oxidation inhibitor. It is preferred that the first layer (including a single-layered interlayer film) contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl) butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid) ethylenebis (oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis (4, 6-di-t-butyl-1-phenyloxy) (2-ethylhexyloxy) phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

For maintaining high visible light transmittance of the interlayer film and the laminated glass over a long period of time, it is preferred that the content of the oxidation inhibitor be 0.1% by weight or more in 100% by weight of the layer containing the oxidation inhibitor (the first layer, the second layer or the third layer). Moreover, since an effect commensurate with the addition of an oxidation inhibitor is not attained, it is preferred that the content of the oxidation inhibitor be 2% by weight or less in 100% by weight of the layer containing the oxidation inhibitor.

### (Other ingredients)

Each of the interlayer film, the first layer, the second layer, and the third layer may contain additives such as a coupling agent, a dispersing agent, a surfactant, a flame retardant, an antistatic agent, an adhesivity adjusting agent other than metal salt, a moisture-resistance agent, a fluorescent brightening agent, and an infrared ray absorber, as necessary. One kind of these additives may be used alone, and two or more kinds thereof may be used in combination.

### (Infrared reflective layer)

The interlayer film may include an Infrared reflective layer. The infrared reflective layer is a layer reflecting infrared rays. The infrared reflective layer is not particularly limited as long as it has the property of reflecting infrared rays.

The infrared reflective layer may be arranged between the first layer and the second layer, or between the first layer and the third layer. Also, the second layer or the third layer may be an infrared reflective layer.

The infrared reflective layer may be arranged on a surface side opposite to the first layer of the second layer, or may be arranged on a surface side opposite to the first layer of the third layer. In this case, in the interlayer film, a fourth layer may be arranged on a surface side opposite to the second layer of the infrared reflective layer, or the fourth layer may be arranged on a surface side opposite to the third layer of the infrared reflective layer.

Examples of the infrared reflective layer include a resin film with metal foil, a multilayer laminate film in which a metal layer and a dielectric layer are formed on a resin layer, a film containing graphite, a multilayer resin film, and a liquid crystal film. These films have the property of reflecting infrared rays.

It is preferred that the infrared reflective layer be a resin film with metal foil, a film containing graphite, a multilayer resin film, or a liquid crystal film, and it is more preferred that the infrared reflective layer be a resin film with metal foil, a multilayer resin film, or a liquid crystal film. These films are significantly excellent in the infrared reflecting property. Therefore, by using these films, it is possible to obtain a laminated glass having still higher heat shielding property, and capable of keeping the high visible light transmittance for a still longer term.

It is further preferred that the infrared reflective layer be a multilayer resin film or a liquid crystal film. Since these films can transmit electromagnetic waves compared with a resin film with metal foil, laminated glass can be used without interfering with the use of an electronic device in a vehicle.

The resin film with metal foil includes a resin film, and a metal foil layered on the outer surface of the resin film. Examples of the material of the resin film include a polyethylene terephthalate resin, a polyethylene naphthalate resin, a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl chloride resin, and a polyimide resin. Examples of the material of the metal foil include aluminum, copper, silver, gold, palladium, and alloys containing these metals.

The multilayer laminate film in which a metal layer and a dielectric layer are formed on a resin layer is a multilayer laminate film in which any number of layers of the metal layer and the dielectric layer are alternately layered. In the multilayer laminate film in which a metal layer and a dielectric layer are formed on a resin layer, it is preferred that all of the metal layers and the dielectric layers be layered alternately, however, there may be a structural part in which a metal layer and a dielectric layer are not layered alternately as exemplified by metal layer/dielectric layer/metal layer/dielectric layer/metal layer/metal layer/dielectric layer/metal layer.

As the material of the resin layer (resin film) in the multilayer laminate film, those exemplified as the material of the resin film in the resin film with metal foil can be exemplified. Examples of the material of the resin layer (resin film) in the multilayer laminate film include polyethylene, polypropylene, polylactic acid, poly(4-methylpentene-1), polyvinylidene fluoride, cyclic polyolefin, polymethyl methacrylate, polyvinyl chloride, polyvinyl alcohol, polyamide such as nylon 6, 11, 12, 66 and the like, polystyrene, polycarbonate, polyethylene terephthalate, polyethylene naphthalate, polyester, polyphenylene sulfide, and polyether imide. As the material of the metal layer in the multilayer laminate film, those exemplified as the material of the metal foil in the resin film with metal foil can be exemplified. A coating layer of metal or a mixed oxide of metal can be given to the both faces or either face of the metal layer. Examples of the material of the coating layer include ZnO, Al₂O₃, Ga₂O₃, InO₃, MgO, Ti, NiCr and Cu.

Examples of the dielectric layer in the multilayer laminate film include indium oxide.

The multilayer resin film is a laminate film in which a plurality of resin films are layered. As the material of the multilayer resin film, those exemplified as the material of the resin layer (resin film) in the multilayer laminate film can be exemplified. The number of layered resin films in the multilayer resin film is 2 or more, and may be 3 or more, and may be 5 or more. The number of layered resin films in the multilayer resin film may be 1000 or less, and may be 100 or less, and may be 50 or less.

The multilayer resin film may be a multilayer resin film in which any number of layers of two or more kinds of thermoplastic resin films having different optical properties (refractive index) are layered alternately or randomly. Such a multilayer resin film is so configured that a desired infrared reflecting property is obtained.

As the liquid crystal film, a film in which any number of layers of cholesteric liquid crystal layers that reflect the light of desired wavelength are layered can be recited. Such a liquid crystal film is so configured that desired infrared reflecting property is obtained.

The laminate of the infrared reflective layer and the second lamination glass member may be a second lamination glass member with metal foil. In this case, the metal foil functions as the infrared reflective layer.

For excellent performance of reflecting infrared rays, it is preferred that the infrared reflective layer have such a property that the infrared transmittance is 40% or less at at least one wavelength within the range of 800 nm to 2000 nm. The infrared transmittance of the infrared reflective layer used in the later-described example satisfies the aforementioned preferred requirement. At at least one wavelength within the range of 800 nm to 2000 nm, the infrared transmittance is more preferably 30% or less, and further preferably 20% or less.

Transmittance at each wavelength within the wavelength range of 800 nm to 2000 nm of the infrared reflective layer is specifically measured in the following manner. A single infrared reflective layer is prepared. Spectral transmittance at each wavelength within the wavelength of 800 nm to 2000 nm of the infrared reflective layer is obtained by using a spectrophotometer ("U-4100" available from Hitachi High-Tech Corporation) in accordance with JIS R3106:1998.

From the viewpoint of effectively enhancing the heat shielding property of the laminated glass, the infrared reflectance at a wavelength of 800 nm to 1200 nm of the infrared reflective layer is preferably 20% or more, more preferably 22% or more, and further preferably 25% or more.

The infrared reflectance at a wavelength of 800 nm to 1200 nm of the infrared reflective layer is specifically measured in the following manner. Reflectance at each wavelength within the wavelength of 800 nm to 1200 nm of the infrared reflective layer is obtained by using a spectrophotometer ("U-4100" available from Hitachi High-Tech Corporation) in accordance with JIS R3106:1998. Of the values of reflectance at each wavelength, it is preferred that the lowest value of reflectance be the above lower limit or more.

From the viewpoint of effectively enhancing the transparency of the laminated glass, the visible light transmittance at a wavelength of 380 nm to 780 nm of the infrared reflective layer is preferably 20% or more, more preferably 50% or more, and further preferably 70% or more.

The visible light transmittance is measured at a wavelength ranging from 380 nm to 780 nm by using a spectrophotometer ("U-4100" available from Hitachi High-Tech Corporation) in accordance with JIS R3211:1998.

### (Other details of interlayer film for laminated glass)

The thickness of the interlayer film is not particularly limited. From the viewpoint of the practical aspect and the viewpoint of sufficiently enhancing the penetration resistance and the flexural rigidity of laminated glass, an average thickness of the interlayer film is preferably 0.1 mm or more, more preferably 0.25 mm or more, and is preferably 3 mm or less, more preferably 1.5 mm or less. When the average thickness of the interlayer film is the above lower limit or more, the penetration resistance and the flexural rigidity of laminated glass are further enhanced. When the average thickness of the interlayer film is the above upper limit or less, the transparency of the interlayer film is further improved.

An average thickness of the interlayer film is designated as T. The average thickness of the first layer is preferably 0.035T or more, more preferably 0.0625T or more, further preferably 0.1T or more and is preferably 0.4T or less, more preferably 0.375T or less, further preferably 0.25T or less, especially preferably 0.15T or less. When the average thickness of the first layer is 0.4T or less, the flexural rigidity is further improved. Also, when the average thickness of the first layer is the above lower limit or more and the above upper limit or less, the absolute value of difference and the secondary resonance frequency can be easily controlled within the preferred ranges, so that the effect of the present invention can be exerted more effectively.

The average thickness of each of the second layer and the third layer is preferably 0.3T or more, more preferably 0.3125T or more, further preferably 0.375T or more and is preferably 0.97T or less, more preferably 0.9375T or less, further preferably 0.9T or less. The average thickness of each of the second layer and the third layer may be 0.46875T or less, and may be 0.45T or less. When the average thickness of each of the second layer and the third layer is the above lower limit or more and the above upper limit or less, the flexural rigidity of the laminated glass are further enhanced. Also, when the average thickness of each of the second layer and the third layer is the above lower limit or more and the above upper limit or less, the absolute value of difference and the secondary resonance frequency can be easily controlled within the preferred ranges, so that the effect of the present invention can be exerted more effectively.

A total of the average thickness of the second layer and the average thickness of the third layer is preferably 0.625T or more, more preferably 0.75T or more, further preferably 0.85T or more and is preferably 0.97T or less, more preferably 0.9375T or less, further preferably 0.9T or less. When the total is the above lower limit or more and the above upper limit or less, the flexural rigidity of the laminated glass are further enhanced. Also, when the total is the above lower limit or more and the above upper limit or less, the absolute value of difference and the secondary resonance frequency can be easily controlled within the preferred ranges, so that the effect of the present invention can be exerted more effectively.

The interlayer film has one end and the other end being at the opposite side of the one end. The one end and the other end are end parts of both sides facing each other in the interlayer film. The interlayer film may be an interlayer film having a uniform thickness, or may be an interlayer film having varying thickness. The interlayer film may be an interlayer film in which the thickness of the one end and the thickness of the other end are the same, or may be an interlayer film in which the thickness of the other end is larger than the thickness of the one end. The sectional shape of the interlayer film may be a rectangular shape or may be a wedge-like shape.

A distance between one end and the other end of the interlayer film is defined as L. It is preferred that the interlayer film have a minimum thickness in a region from the position of 0L to the position of 0.4L from the one end toward the other end, and have a maximum thickness in a region from the position of 0L to the position of 0.4L from the other end toward the one end. It is more preferred that the interlayer film have a minimum thickness in a region from the position of 0L to the position of 0.3L from the one end toward the other end, and have a maximum thickness in a region from the position of 0L to the position of 0.3L from the other end toward the one end. It is still more preferred that the interlayer film have a minimum thickness in a region from the position of 0L to the position of 0.2L from the one end toward the other end, and have a maximum thickness in a region from the position of 0L to the position of 0.2L from the other end toward the one end. It is further preferred that the interlayer film have a minimum thickness in a region from the position of 0L to the position of 0.1L from the one end toward the other end, and have a maximum thickness in a region from the position of 0L to the position of 0.1L from the other end toward the one end. It is especially preferred that the interlayer film have a minimum thickness at the one end and have a maximum thickness at the other end.

The interlayer film may have a uniform-thickness part. The uniform-thickness part means that the variation in thickness does not exceed 10 µm per a distance range of 10 cm in the direction connecting the one end and the other end of the interlayer film. Therefore, the uniform-thickness part refers to the part where the variation in thickness does not exceed 10 µm per a distance range of 10 cm in the direction connecting the one end and the other end of the interlayer film. To be more specific, the uniform-thickness part refers to the part where the thickness does not vary at all in the direction connecting the one end and the other end of the interlayer film, or the thickness varies by 10 µm or less per a distance range of 10 cm in the direction connecting the one end and the other end of the interlayer film.

The maximum thickness of the interlayer film is preferably 0.1 mm or more, more preferably 0.25 mm or more, further preferably 0.5 mm or more, especially preferably 0.8 mm or more and is preferably 3.8 mm or less, more preferably 2 mm or less, further preferably 1.5 mm or less.

The distance L between one end and the other end of the interlayer film is preferably 3 m or less, more preferably 2 m or less, especially preferably 1.5 m or less, and preferably 0.5 m or more, more preferably 0.8 m or more, and especially preferably 1 m or more.

The interlayer film may be wound to be formed into a roll body of the interlayer film. The roll body may include a winding core and an interlayer film wound on the outer periphery of the winding core.

The production method of the interlayer film according to the present invention is not particularly limited. In the case of a single-layered interlayer film, examples of the production method of the interlayer film according to the present invention include a method of extruding a resin composition with an extruder. As a method for producing the interlayer film according to the present invention, a method of separately forming resin compositions used for constituting respective layers into respective layers, and then layering the obtained layers, and a method of coextruding resin compositions used for constituting respective layers with an extruder to layer the layers can be recited in the case of a multi-layered interlayer film. A production method of extrusion-molding is preferred because the method is suitable for continuous production.

For the reason of excellent production efficiency of the interlayer film, it is preferred that the second layer and the third layer contain the same polyvinyl acetal resin. For the reason of excellent production efficiency of the interlayer film, it is more preferred that the second layer and the third layer contain the same polyvinyl acetal resin and the same plasticizer. For the reason of excellent production efficiency of the interlayer film, it is further preferred that the second layer and the third layer be formed of the same resin composition.

It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method, an emboss roll method, a calender roll method, a profile extrusion method, and the like. The emboss roll method is preferred because a large number of embosses of the protrusions and recesses, which is a quantitatively constant protrusion and recess pattern, can be formed.

### (Laminated glass)

The laminated glass according to the present invention includes a first lamination glass member, a second lamination glass member and the aforementioned interlayer film for laminated glass. In the laminated glass according to the present invention, the above-described interlayer film for laminated glass is arranged between the first lamination glass member and the second lamination glass member.

The laminated glass according to the present invention includes a first lamination glass member, a second lamination glass member and an interlayer film for laminated glass having a one-layer structure or a two or more-layer structure. In the laminated glass according to the present invention, the above-mentioned interlayer film for laminated glass is arranged between the first lamination glass member and the second lamination glass member. In the laminated glass according to the present invention, it is preferred that an absolute value of difference between the secondary resonance frequency of the laminated glass before irradiation with xenon light and the secondary resonance frequency of the laminated glass after irradiation with xenon light determined by the following xenon light irradiation test be 70 Hz or less. It is preferred that the laminated glass according to the present invention have a loss factor at 20°C of 0.24 or more, and a solar transmittance of 50% or less.

Xenon light irradiation test: a secondary resonance frequency at 20°C of a laminated glass is determined by the central exciting method in accordance with ISO16940. The laminated glass is irradiated with xenon light of 190 W/m² for 20 minutes under the condition of 20°C. A secondary resonance frequency of the laminated glass after irradiation with xenon light is determined by the central exciting method in accordance with ISO16940. An absolute value of difference between the secondary resonance frequency of the laminated glass before irradiation with xenon light and the secondary resonance frequency of the laminated glass after irradiation with xenon light is calculated.

In the xenon light irradiation test of the laminated glass, more specifically, the measurement is conducted in the following manner.
(1) A secondary resonance frequency at 20°C of the laminated glass is determined by the central exciting method in accordance with ISO16940.
(2) The laminated glass is irradiated with xenon light of 190 W/m² for 20 minutes under a calm condition of 20°C. As an apparatus for emitting xenon light, a solar simulator apparatus (for example, "HAL-320" available from Asahi Spectra Co., Ltd.) and the like can be recited. As an apparatus for measuring illuminance, an illuminometer (for example, "KEYSIGHT U1252B, sensor EKO Pyranometer ML-01" available from Keysight Technologies ) and the like are recited. The distance between the principal plane of laminated glass and a light source (xenon lamp or the like) is not particularly limited as long as the arrangement gives an illuminance of 190 W/m².
(3) A secondary resonance frequency of the laminated glass after irradiation with xenon light is determined by the central exciting method in accordance with ISO16940. At this time, the secondary resonance frequency is determined within 2 minutes (preferably within 1 minute) after xenon light irradiation.
(4) An absolute value of difference between the secondary resonance frequency of the laminated glass before irradiation with xenon light determined in the above (1) and the secondary resonance frequency of the laminated glass after irradiation with xenon light determined in the above (3) is calculated.

Since the laminated glass according to the present invention is provided with the above configuration, it is possible to suppress the change in sound insulating property in a relatively high temperature region.

An absolute value of difference between the secondary resonance frequency of the laminated glass before irradiation with xenon light and the secondary resonance frequency of the laminated glass after irradiation with xenon light is preferably 1 Hz or more, more preferably 20 Hz or more, and is preferably 65 Hz or less, more preferably 45 Hz or less, further preferably 33 Hz or less. When the absolute value of the difference is the above lower limit or more and the above upper limit or less, it is possible to exert the effect of the present invention more effectively.

From the viewpoint of exerting the effect of the present invention more effectively, a secondary resonance frequency at 20°C of the laminated glass before irradiation with xenon light is preferably 530 Hz or more, more preferably 560 Hz or more, and is preferably 680 Hz or less, more preferably 640 Hz or less, further preferably 599 Hz or less.

From the viewpoint of exerting the effect of the present invention more effectively, a secondary resonance frequency of the laminated glass after irradiation with xenon light is preferably 500 Hz or more, more preferably 530 Hz or more, and is preferably 600 Hz or less, more preferably 565 Hz or less.

From the viewpoint of exerting the effect of the present invention further effectively, the loss factor at 20°C of the laminated glass is preferably 0.26 or more, and is preferably 0.5 or less, more preferably 0.4 or less.

The loss factor at 20°C of the laminated glass is measured by the central exciting method in accordance with ISO16940.

From the viewpoint of exerting the effect of the present invention more effectively and further enhancing the heat shielding property, the solar transmittance of the laminated glass is preferably 10% or more, more preferably 15% or more, and is preferably 48% or less, more preferably 44% or less.

The solar transmittance of the laminated glass is measured in accordance with JIS R3106:1998 using a spectrophotometer (for example, "U-4100" available from Hitachi High-Tech Corporation).

Fig. 3 is a sectional view schematically showing an example of laminated glass prepared with the interlayer film for laminated glass shown in Fig. 1.

A laminated glass 31 shown in Fig. 3 includes a first lamination glass member 21, a second lamination glass member 22 and the interlayer film 11. The interlayer film 11 is arranged between the first lamination glass member 21 and the second lamination glass member 22 to be sandwiched therebetween.

The first lamination glass member 21 is layered on a first surface 11a of the interlayer film 11. The second lamination glass member 22 is layered on a second surface 11b opposite to the first surface 11a of the interlayer film 11. The first lamination glass member 21 is layered on an outer surface 2a of the second layer 2. The second lamination glass member 22 is layered on an outer surface 3a of the third layer 3.

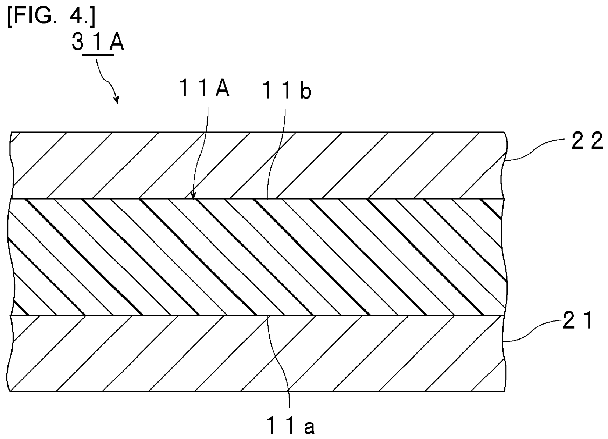

Fig. 4 is a sectional view schematically showing an example of laminated glass prepared with the interlayer film for laminated glass shown in Fig. 2.

A laminated glass 31A shown in Fig. 4 includes the first lamination glass member 21, the second lamination glass member 22 and the interlayer film 11A. The interlayer film 11A is arranged between the first lamination glass member 21 and the second lamination glass member 22 to be sandwiched therebetween.

The first lamination glass member 21 is layered on the first surface 11a of the interlayer film 11A. The second lamination glass member 22 is layered on the second surface 11b opposite to the first surface 11a of the interlayer film 11A.

As described above, the laminated glass according to the present invention includes a first lamination glass member, a second lamination glass member, and an interlayer film, and the interlayer film is the interlayer film for laminated glass according to the present invention. In the laminated glass according to the present invention, the above-mentioned interlayer film is arranged between the first lamination glass member and the second lamination glass member.

It is preferred that the first lamination glass member be the first glass plate. It is preferred that the second lamination glass member be the second glass plate.

Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first and second lamination glass members be a glass plate or a PET (polyethylene terephthalate) film and the laminated glass include at least one glass plate as the first and second lamination glass members. It is especially preferred that both of the first and second lamination glass members be glass plates.

Examples of the glass plate include a sheet of inorganic glass and a sheet of organic glass. Examples of the inorganic glass include float plate glass, heat ray absorbing plate glass, heat ray reflecting plate glass, polished plate glass, figured glass, wired plate glass, green glass, and the like. The organic glass is synthetic resin glass substituted for inorganic glass. Examples of the organic glass include a polycarbonate plate, a poly (meth) acrylic resin plate, and the like. Examples of the poly(meth)acrylic resin plate include a polymethyl (meth)acrylate plate, and the like.

It is preferred that each of the first lamination glass member and the second lamination glass member be green glass or heat ray absorbing plate glass. The first lamination glass member is preferably green glass or a heat ray absorbing plate glass, more preferably green glass because the heat ray absorbing plate glass is high in infrared transmittance, and provides the laminated glass with higher heat shielding property. The second lamination glass member is preferably green glass or a heat ray absorbing plate glass, more preferably green glass because the heat ray absorbing plate glass is low in infrared transmittance, and provides the laminated glass with higher heat shielding property. It is preferred that the first lamination glass member be clear glass, and the second lamination glass member be heat ray absorbing plate glass. The heat-ray absorbing plate glass is heat ray absorbing plate glass conforming to JIS R3208.

The thicknesses of each of the first lamination glass member and the second lamination glass member is preferably 1 mm or more, and is preferably 5 mm or less, and more preferably 3 mm or less. Moreover, when the first, second lamination glass members are glass plates, the thickness of the glass plate is preferably 0.5 mm or more, more preferably 0.7 mm or more, preferably 5 mm or less and more preferably 3 mm or less. When the first, second lamination glass members are PET films, the thickness of the PET film is preferably 0.03 mm or more and is preferably 0.5 mm or less.

The method for producing the laminated glass is not particularly limited. For example, the interlayer film is sandwiched between the first lamination glass member and the second lamination glass member, and then, passed through pressure rolls or subjected to decompression suction in a rubber bag, so that the air remaining between the first and the second lamination glass members and the interlayer film is removed. Afterward, the members are preliminarily bonded together at about 70°C to 110°C to obtain a laminate. Next, by putting the laminate into an autoclave or by pressing the laminate, the members are press-bonded together at about 120°C to 150°C and under a pressure of 1 MPa to 1.5 MPa. In this way, laminated glass can be obtained. At the time of producing the laminated glass, layers in the interlayer film may be layered.

Each of the interlayer film and the laminated glass can be used for automobiles, railway vehicles, aircraft, ships, buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass or roof glass of an automobile, and the like. The interlayer film and the laminated glass are suitably used for automobiles. The interlayer film is used for obtaining laminated glass of an automobile.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

The following materials were prepared.

### (Thermoplastic resin)

Polyvinyl acetal resin 1 (polyvinyl butyral resin (PVB1), the average polymerization degree of 3000, the content of the hydroxyl group of 17% by mole, the acetylation degree of 12% by mole, the acetalization degree (the butyralization degree) of 71% by mole))
Polyvinyl acetal resin 2 (polyvinyl butyral resin (PVB2), the average polymerization degree of 3000, the content of the hydroxyl group of 18% by mole, the acetylation degree of 8% by mole, the acetalization degree (the butyralization degree) of 74% by mole))
Polyvinyl acetal resin 3 (polyvinyl butyral resin (PVB3), the average polymerization degree of 3000, the content of the hydroxyl group of 19% by mole, the acetylation degree of 1% by mole, the acetalization degree (the butyralization degree) of 80% by mole))
Polyvinyl acetal resin 4 (polyvinyl butyral resin (PVB4), the average polymerization degree of 3000, the content of the hydroxyl group of 15% by mole, the acetylation degree of 16% by mole, the acetalization degree (the butyralization degree) of 69% by mole))
Polyvinyl acetal resin 5 (polyvinyl butyral resin (PVB5), the average polymerization degree of 3000, the content of the hydroxyl group of 18% by mole, the acetylation degree of 16% by mole, the acetalization degree (the butyralization degree) of 66% by mole))
Polyvinyl acetal resin 6 (polyvinyl butyral resin (PVB6), the average polymerization degree of 1700, the content of the hydroxyl group of 30% by mole, the acetylation degree of 1% by mole, the acetalization degree (the butyralization degree) of 69% by mole))
Polyvinyl acetal resin 7 (polyvinyl butyral resin (PVB7), the average polymerization degree of 1700, the content of the hydroxyl group of 31% by mole, the acetylation degree of 1% by mole, the acetalization degree (the butyralization degree) of 68% by mole))
Polyvinyl acetal resin 8 (polyvinyl butyral resin (PVB8), the average polymerization degree of 1700, the content of the hydroxyl group of 29% by mole, the acetylation degree of 1% by mole, the acetalization degree (the butyralization degree) of 70% by mole))

### (Plasticizer)

Triethylene glycol di-2-ethylhexanoate (3GO)

### (Heat shielding substance or coloring agent)

Heat shielding particles:
Tin-doped indium oxide particles (ITO particles, average particle diameter: 0.01 µm)
Cesium-doped tungsten oxide particles (CWO particles, average particle diameter: 0.02 µm)

Ingredient X:
Pigment blue 15 (phthalocyanine compound containing copper atoms)
Pigment green 7 (phthalocyanine compound containing copper atoms)
Pigment black 1 (carbon black)
Phthalocyanine compound X (Phthalocyanine compound containing vanadium atoms, "FDN-001" available from YAMADA CHEMICAL CO., LTD.)

Others:
Solvent red 146 (S.R.146, anthraquinone dye, 1-amino-4-hydroxy-2-phenoxy-9,10-anthraquinone)
Pigment blue 60 (P.B60, anthraquinone dye, 6,15-dihydrodinaphtho[2,3-a:2,3-h]phenazine-5,9,14,18-tetraone)

### (Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

### (Oxidation inhibitor)

BHT (2,6-di-t-butyl-p-cresol)

The following lamination glass members were prepared.

### (Lamination glass members)

Green glass 1 (thickness 2 mm, solar transmittance (Ts2100) 70%)
Green glass 2 (thickness 1.9 mm, solar transmittance (Ts2100) 70%)
Heat ray absorbing plate glass (thickness 1.9 mm, solar transmittance (Ts2100) 62%)

### (Example 1, which is not according to the present invention)

### Preparation of composition for forming first layer:

The following ingredients were mixed, and kneaded sufficiently with a mixing roll to obtain a composition for forming a first layer.
Polyvinyl acetal resin 1 (PVB1): 100 parts by weight
Triethylene glycol di-2-ethylhexanoate (3GO): 74 parts by weight
Tinuvin 326 in an amount of 0.2% by weight in the obtained first layer
BHT in an amount of 0.2% by weight in the obtained first layer

Preparation of composition for forming second layer and third layer:
The following ingredients were mixed, and kneaded sufficiently with a mixing roll to obtain a composition for forming a second layer and a third layer.
Polyvinyl acetal resin 6 (PVB6): 100 parts by weight
Triethylene glycol di-2-ethylhexanoate (3GO): 38 parts by weight
ITO particles in an amount of 0.16% by weight in the obtained second, third layers
Tinuvin 326 in an amount of 0.2% by weight in the obtained second, third layers
BHT in an amount of 0.2% by weight in the obtained second, third layers

### Preparation of interlayer film:

By coextruding the composition for forming a first layer and a composition for forming a second layer and a third layer using a coextruder, an interlayer film (800 µm in thickness) having a laminate structure of a second layer (345 µm in thickness)/a first layer (110 µm in thickness)/a third layer (345 µm in thickness) was prepared.

### Preparation of laminated glass:

An interlayer film was sandwiched between two sheets of green glass having a thickness of 2 mm to obtain a laminate. The obtained laminate was put into a rubber bag and the inside thereof was degassed for 20 minutes at a degree of vacuum of 2.6 kPa, after which the laminate was transferred into an oven while being degassed, and furthermore, held in place at 90°C for 30 minutes and pressed under vacuum to preliminary press-bond the laminate. The preliminarily press-bonded laminate was subjected to press-bonding for 20 minutes under conditions of 135°C and a pressure of 1.2 MPa in an autoclave to obtain a sheet of laminated glass. The laminated glass was cut to obtain a laminated glass (1) having a size of 25 mm long and 300 mm wide. Also, the laminated glass was cut to obtain a laminated glass (2) having a size of 500 mm long and 500 mm wide.

### (Examples 2 to 5 and Comparative Example 1, which are all not according to the present invention)

An interlayer film and laminated glasses (1), (2) were obtained in the same manner as that in Example 1 except that the kind of the polyvinyl acetal resin, the content of the plasticizer, and the thicknesses of the first, second, third layers were changed as shown in Tables 1, 2.

### (Example 6, which is not according to the present invention)

An interlayer film and laminated glasses (1), (2) were obtained in the same manner as that in Example 1 except that the kind of the polyvinyl acetal resin, and the content of the plasticizer were changed as shown in Table 2, and CWO particles were used as heat shielding particles in the content shown in Table 2.

### (Example 7, which is not according to the present invention)

An interlayer film and laminated glasses (1), (2) were obtained in the same manner as that in Example 1 except that the kinds of the polyvinyl acetal resin, the content of the plasticizer, and the kinds of the lamination glass members were changed as shown in Table 2.

### (Example 8, which is not according to the present invention)

An interlayer film and laminated glasses (1), (2) were obtained in the same manner as that in Example 1 except that the kinds of the polyvinyl acetal resin, the content of the plasticizer, and the kinds of the lamination glass members were changed as shown in Table 3, and pigment blue 15 was used as a heat shielding substance and a coloring agent in the content shown in Table 3.

### (Example 9, which is not according to the present invention)

An interlayer film and laminated glasses (1), (2) were obtained in the same manner as that in Example 1 except that the kind of the polyvinyl acetal resin, the content of the plasticizer, and the kinds of the lamination glass members were changed as shown in Table 3, and pigment green 7 was used as a heat shielding substance and a coloring agent in the content shown in Table 3.

### (Example 10)

An interlayer film and laminated glasses (1), (2) were obtained in the same manner as that in Example 1 except that the kind of the polyvinyl acetal resin, the content of the plasticizer, and the kinds of the lamination glass members were changed as shown in Table 3, pigment blue 15 was used as a heat shielding substance and a coloring agent in the content shown in Table 3, and ITO particles were used as a heat shielding substance in the content shown in Table 3. In Example 10, pigment blue 15 in an amount of 0.022% by weight in the obtained second, third layers, and ITO particles in an amount of 0.16% by weight in the obtained second, third layers were used.

### (Example 11, which is not according to the present invention)

An interlayer film and laminated glasses (1), (2) were obtained in the same manner as that in Example 1 except that the kind of the polyvinyl acetal resin, the content of the plasticizer, and the kinds of the lamination glass members were changed as shown in Table 4, and pigment black 1, solvent red 146, and pigment blue 60 were used as a heat shielding substance and a coloring agent in the contents shown in Table 4. In Example 11, pigment black 1 in an amount of 0.001% by weight in the obtained second, third layers, solvent red 146 in an amount of 0.0005% by weight in the obtained second, third layers, and pigment blue 60 in an amount of 0.0007% by weight in the obtained second, third layers were used.

### (Example 12)

The kind of the polyvinyl acetal resin, the content of the plasticizer, and the kinds of lamination glass members were changed as shown in Table 4. Also, as the heat shielding substance and the coloring agent, phthalocyanine compound X was used in the content shown in Table 4, and as the heat shielding substance, ITO particles and CWO particles were used in the contents shown in Table 4. An interlayer film and laminated glasses (1), (2) were obtained in the same manner as that in Example 1 except for the above. In Example 12, ITO particles in an amount of 0.24% by weight in the obtained second, third layers, CWO particles in an amount of 0.01% by weight in the obtained second, third layers, and phthalocyanine compound X in an amount of 0.0008% by weight in the obtained second, third layers were used.

### (Example 13, which is not according to the present invention)

An interlayer film and laminated glasses (1), (2) were obtained in the same manner as that in Example 4 except that the thickness of the one end and the thickness of the other end of the interlayer film were changed as shown in Table 4 to prepare the interlayer film in which the thickness of the other end is larger than the thickness of the one end (wedge-like interlayer film). In Example 13, laminated glass was cut such that there is a position of 5 cm from one end of the laminated glass corresponding to the one end of the interlayer film toward the other in laminated glasses (1), (2), and the later-describe evaluation was conducted at this position.

### (Example 14, which is not according to the present invention)

As the infrared reflective layer, Nano90s (multilayer resin film available from Sumitomo 3M Limited) was prepared. Using the infrared reflective layer, an interlayer film having a laminate structure of the fourth layer (390 µm)/the infrared reflective layer (100 µm)/ the second layer (345 µm thick)/the first layer (110 µm thick)/the third layer (345 µm thick) was prepared. Also, using the obtained interlayer film and lamination glass members shown in Table 5, laminated glasses (1), (2) were prepared in the same manner as that in Example 1. Compositions of layers are shown in Table 5.

### (Evaluation)

The laminated glass (1) obtained in Examples 1 to 6, 13, and Comparative Example 1 corresponds the laminated glass X.

### (1) Solar transmittance

Solar transmittance (Tds: Solar Direct Transmittance) at a wavelength ranging from 300 nm to 2500 nm of the obtained laminated glass (1) was measured by using a spectrophotometer ("U-4100" available from Hitachi High-Tech Corporation) in accordance with JIS R3106:1998.

### (2) Visible light transmittance

The visible light transmittance (Tv: Visible Transmittance) at a wavelength ranging from 380 nm to 780 nm of the obtained laminated glass (1) was measured by using a spectrophotometer ("U-4100" available from Hitachi High-Tech Corporation) in accordance with JIS R3211:1998.

### (3) Loss factor (20°C)

A loss factor at 20°C of the obtained laminated glass (1) was measured by the central exciting method in accordance with ISO16940.

### (4) Xenon light irradiation test

The obtained laminated glasses (1), (2) were irradiated with xenon light of 190 W/m² for 20 minutes under a calm condition of 20°C.

### (4-1) Secondary resonance frequency

The temperature of the surface of the laminated glass (1) was measured before and after irradiation with xenon light. Also, for the laminated glass (1) before irradiation with xenon light, a secondary resonance frequency at 20°C was determined by the central exciting method in accordance with ISO16940. Also, within 2 minutes after irradiation with xenon light, for the laminated glass (1) after irradiation with xenon light, a secondary resonance frequency at 20°C was determined by the central exciting method in accordance with ISO16940. From the obtained secondary resonance frequencies, an absolute value of difference between the secondary resonance frequency of the laminated glass (1) before irradiation with xenon light and the secondary resonance frequency of the laminated glass (1) after irradiation with xenon light was calculated.

### (4-2) Sound transmission loss (4000 Hz)

A reverberation room in accordance with ISO 10140-5 in which a first reverberation room serving as a sound source room, and a second reverberation room serving as a sound receiving room are connected was prepared. The laminated glass (2) before irradiation with xenon light was placed between the first reverberation room and the second reverberation room. The sound transmission loss at 20°C and a frequency of 4000 Hz was measured by using a sound transmission loss measuring device available from RION Co., Ltd. "Intensity Probe SI-50, Multichannel Analyzer SA-02". Specifically, sound transmission loss (dB) in accordance with JIS A1441-1 was measured by an intensity method. The center frequency in measurement was 1/3 octave band. Also, for the laminated glass (2) after irradiation with xenon light, a sound transmission loss (dB) at a frequency of 4000 Hz was measured in the same manner within 2 minutes after irradiation with xenon light. From the obtained sound transmission losses, an absolute value of difference between the sound transmission loss of the laminated glass (2) before irradiation with xenon light and the sound transmission loss of the laminated glass (2) after irradiation with xenon light was calculated.

The details and the results are shown in the following Tables 1 to 6. In Table, the description of the ultraviolet ray screening agent and the oxidation inhibitor was omitted. In Tables, a content of a heat shielding substance of a coloring agent indicates a content in 100% by weight of the second, third layers.

**[Table 1]**

| | | | Comparative Example 1 | Example 1 | Example 2 | Example 3 |
|---|---|---|---|---|---|---|
| First lamination glass member | Kind | | Green glass 1 | Green glass 1 | Green glass 1 | Green glass 1 |
| | Thickness (mm) | | 2 | 2 | 2 | 2 |
| | Solar transmittance (%) | | 70 | 70 | 70 | 70 |
| Second lamination glass member | Kind | | Green glass 1 | Green glass 1 | Green glass 1 | Green glass 1 |
| | Thickness (mm) | | 2 | 2 | 2 | 2 |
| | Solar transmittance (%) | | 70 | 70 | 70 | 70 |
| | Polyvinyl acetal resin | Kind | PVB6 | PVB6 | PVB7 | PVB8 |
| | | Acetalization degree (mol%) | 69 | 69 | 68 | 70 |
| | | Content of hydroxyl group (mol%) | 30 | 30 | 31 | 29 |
| | | Acetylation degree (mol%) | 1 | 1 | 1 | 1 |
| | | Content (parts by weight) | 100 | 100 | 100 | 100 |
| Second, third layers | Plasticizer | Kind | 3GO | 3GO | 3GO | 3GO |
| | | Content (parts by weight) | 38 | 38 | 38 | 38 |
| | Heat shielding substance or coloring agent | Kind | ITO particles | ITO particles | ITO particles | ITO particles |
| | | Content (wt%) | 0.16 | 0.16 | 0.16 | 0.16 |
| | Total thickness of one end (µm) | | 690 | 690 | 700 | 700 |
| | Total thickness of the other end (µm) | | 690 | 690 | 700 | 700 |
| | Polyvinyl acetal resin | Kind | PVB1 | PVB1 | PVB2 | PVB3 |
| | | Acetalization degree (mol%) | 71 | 71 | 74 | 80 |
| | | Content of hydroxyl group (mol%) | 17 | 17 | 18 | 19 |
| First layer | | Acetylation degree (mol%) | 12 | 12 | 8 | 1 |
| | | Content (parts by weight) | 100 | 100 | 100 | 100 |
| | Plasticizer | Kind | 3GO | 3GO | 3GO | 3GO |
| | | Content (parts by weight) | 71 | 74 | 75 | 76 |
| | Thickness of one end (µm) | | 110 | 110 | 125 | 130 |
| | Thickness of the other end (µm) | | 110 | 110 | 125 | 130 |
| (1) Solar transmittance (Tds) (%) | | | 47 | 47 | 47 | 47 |
| (2) Visible light transmittance (Tv) (%) | | | 79 | 79 | 79 | 79 |
| (3) Loss factor (20°C) | | | 0.3 | 0.24 | 0.25 | 0.26 |
| (4) Xenon light irradiation test | (4-1) Temperature before irradiation (°C) | | 20 | 20 | 20 | 20 |
| | (4-1) Temperature after irradiation (°C) | | 25.2 | 25.2 | 25.2 | 25.2 |
| | (4-1) Secondary resonance frequency before irradiation (Hz) | | 691 | 635 | 615 | 600 |
| | (4-1) Secondary resonance frequency after irradiation (Hz) | | 610 | 574 | 568 | 557 |
| | (4-1) Absolute value of difference (Hz) | | 81 | 61 | 47 | 43 |
| | (4-2) Absolute value of difference in sound transmission loss before and after irradiation (db) | | 0.79 | 0.59 | 0.46 | 0.42 |

**[Table 2]**

| | | | Example 4 | Example 5 | Example 6 | Example 7 |
|---|---|---|---|---|---|---|
| First lamination glass member | Kind | | Green glass 1 | Green glass 1 | Green glass 1 | Heat ray absorbing plate glass |
| | Thickness (mm) | | 2 | 2 | 2 | 1.9 |
| | Solar transmittance (%) | | 70 | 70 | 70 | 62 |
| Second lamination glass member | Kind | | Green glass 1 | Green glass 1 | Green glass 1 | Heat ray absorbing plate glass |
| | Thickness (mm) | | 2 | 2 | 2 | 1.9 |
| | Solar transmittance (%) | | 70 | 70 | 70 | 62 |
| | Polyvinyl acetal resin | Kind | PVB6 | PVB6 | PVB6 | PVB6 |
| | | Acetalization degree (mol%) | 69 | 69 | 69 | 69 |
| | | Content of hydroxyl group (mol%) | 30 | 30 | 30 | 30 |
| | | Acetylation degree (mol%) | 1 | 1 | 1 | 1 |
| | | Content (parts by weight) | 100 | 100 | 100 | 100 |
| Second, third layers | Plasticizer | Kind | 3GO | 3GO | 3GO | 3GO |
| | | Content (parts by weight) | 38 | 38 | 38 | 38 |
| | Heat shielding substance or coloring agent | Kind | ITO particles | ITO particles | CWO particles | ITO particles |
| | | Content (wt%) | 0.16 | 0.16 | 0.03 | 0.16 |
| | Total thickness of one end (µm) | | 690 | 650 | 690 | 690 |
| | Total thickness of the other end (µm) | | 690 | 650 | 690 | 690 |
| | Polyvinyl acetal resin | Kind | PVB4 | PVB5 | PVB4 | PVB4 |
| | | Acetalization degree (mol%) | 69 | 66 | 69 | 69 |
| | | Content of hydroxyl group (mol%) | 15 | 18 | 15 | 15 |
| First layer | | Acetylation degree (mol%) | 16 | 16 | 16 | 16 |
| | | Content (parts by weight) | 100 | 100 | 100 | 100 |
| | Plasticizer | Kind | 3GO | 3GO | 3GO | 3GO |
| | | Content (parts by weight) | 78 | 81 | 78 | 78 |
| | Thickness of one end (µm) | | 110 | 150 | 110 | 110 |
| | Thickness of the other end (µm) | | 110 | 150 | 110 | 110 |
| (1) Solar transmittance (Tds) (%) | | | 47 | 47 | 43 | 40 |
| (2) Visible light transmittance (Tv) (%) | | | 79 | 79 | 75 | 73 |
| (3) Loss factor (20°C) | | | 0.26 | 0.25 | 0.26 | 0.26 |
| (4) Xenon light irradiation test | (4-1) Temperature before irradiation (°C) | | 20 | 20 | 20 | 20 |
| | (4-1) Temperature after irradiation (°C) | | 25.2 | 25.2 | 25.7 | 26.1 |
| | (4-1) Secondary resonance frequency before irradiation (Hz) | | 573 | 605 | 568 | 569 |
| | (4-1) Secondary resonance frequency after irradiation (Hz) | | 549 | 560 | 540 | 542 |
| | (4-1) Absolute value of difference (Hz) | | 24 | 45 | 28 | 27 |
| | (4-2) Absolute value of difference in sound transmission loss before and after irradiation (db) | | 0.23 | 0.44 | 0.26 | 0.26 |

**[Table 3]**

| | | | Example 8 | Example 9 | Example 10 |
|---|---|---|---|---|---|
| First lamination glass member | Kind | | Green glass 2 | Green glass 2 | Green glass 2 |
| | Thickness (mm) | | 1.9 | 1.9 | 1.9 |
| | Solar transmittance (%) | | 70 | 70 | 70 |
| Second lamination glass member | Kind | | Green glass 1 | Green glass 1 | Green glass 1 |
| | Thickness (mm) | | 2 | 2 | 2 |
| | Solar transmittance (%) | | 70 | 70 | 70 |
| | Polyvinyl acetal resin | Kind | PVB6 | PVB6 | PVB6 |
| | | Acetalization degree (mol%) | 69 | 69 | 69 |
| | | Content of hydroxyl group (mol%) | 30 | 30 | 30 |
| | | Acetylation degree (mol%) | 1 | 1 | 1 |
| | | Content (parts by weight) | 100 | 100 | 100 |
| Second, third layers | Plasticizer | Kind | 3GO | 3GO | 3GO |
| | | Content (parts by weight) | 38 | 38 | 38 |
| | Heat shielding substance or coloring agent | Kind | Pigment blue 15 | Pigment green 7 | Pigment blue 15/ ITO particles |
| | | Content (wt%) | 0.022 | 0.108 | 0.022/0.16 |
| | Total thickness of one end (µm) | | 690 | 690 | 690 |
| | Total thickness of the other end (µm) | | 690 | 690 | 690 |
| | Polyvinyl acetal resin | Kind | PVB4 | PVB4 | PVB4 |
| | | Acetalization degree (mol%) | 69 | 69 | 69 |
| | | Content of hydroxyl group (mol%) | 15 | 15 | 15 |
| | | Acetylation degree (mol%) | 16 | 16 | 16 |
| First layer | | Content (parts by weight) | 100 | 100 | 100 |
| | Plasticizer | Kind | 3GO | 3GO | 3GO |
| | | Content (parts by weight) | 78 | 78 | 78 |
| | Thickness of one end (µm) | | 110 | 110 | 110 |
| | Thickness of the other end (µm) | | 110 | 110 | 110 |
| (1) Solar transmittance (Tds) (%) | | | 35 | 36 | 30 |
| (2) Visible light transmittance (Tv) (%) | | | 29 | 52 | 28 |
| (3) Loss factor (20°C) | | | 0.26 | 0.26 | 0.26 |
| (4) Xenon light irradiation test | (4-1) Temperature before irradiation (°C) | | 20 | 20 | 20 |
| | (4-1) Temperature after irradiation (°C) | | 26.7 | 26.5 | 27.3 |
| | (4-1) Secondary resonance frequency before irradiation (Hz) | | 569 | 569 | 569 |
| | (4-1) Secondary resonance frequency after irradiation (Hz) | | 540 | 540 | 538 |
| | (4-1) Absolute value of difference (Hz) | | 29 | 29 | 31 |
| | (4-2) Absolute value of difference in sound transmission loss before and after irradiation (db) | | 0.28 | 0.28 | 0.30 |

**[Table 4]**

| | | | Example 11 | Example 12 | Example 13 |
|---|---|---|---|---|---|
| First lamination glass member | Kind | | Green glass 2 | Green glass 2 | Green glass 1 |
| | Thickness (mm) | | 1.9 | 1.9 | 2 |
| | Solar transmittance (%) | | 70 | 70 | 70 |
| Second lamination glass member | Kind | | Green glass 1 | Green glass 1 | Green glass 1 |
| | Thickness (mm) | | 2 | 2 | 2 |
| | Solar transmittance (%) | | 70 | 70 | 70 |
| | Polyvinyl acetal resin | Kind | PVB6 | PVB6 | PVB6 |
| | | Acetalization degree (mol%) | 69 | 69 | 69 |
| | | Content of hydroxyl group (mol%) | 30 | 30 | 30 |
| | | Acetylation degree (mol%) | 1 | 1 | 1 |
| | | Content (parts by weight) | 100 | 100 | 100 |
| Second, third layers | Plasticizer | Kind | 3GO | 3GO | 3GO |
| | | Content (parts by weight) | 38 | 38 | 38 |
| | Heat shielding substance or coloring agent | Kind | Pigment black 1 /S.R.146 /P.B.60 | ITO particles /CWO particles /phthalocyanine compound X | ITO particles |
| | | Content (wt%) | 0.001/0.0005 /0.0007 | 0.24/0.01 /0.0008 | 0.16 |
| | Total thickness of one end (µm) | | 690 | 690 | 690 |
| | Total thickness of the other end (µm) | | 690 | 690 | 1121 |
| | Polyvinyl acetal resin | Kind | PVB4 | PVB4 | PVB4 |
| | | Acetalization degree (mol%) | 69 | 69 | 69 |
| | | Content of hydroxyl group (mol%) | 15 | 15 | 15 |
| | | Acetylation degree (mol%) | 16 | 16 | 16 |
| First layer | | Content (parts by weight) | 100 | 100 | 100 |
| | Plasticizer | Kind | 3GO | 3GO | 3GO |
| | | Content (parts by weight) | 78 | 78 | 78 |
| | Thickness of one end (µm) | | 110 | 110 | 110 |
| | Thickness of the other end (µm) | | 110 | 110 | 179 |
| (1) Solar transmittance (Tds) (%) | | | 48 | 42 | 46 |
| (2) Visible light transmittance (Tv) (%) | | | 75 | 77 | 78 |
| (3) Loss factor (20°C) | | | 0.26 | 0.26 | 0.27 |
| (4) Xenon light irradiation test | (4-1) Temperature before irradiation (°C) | | 20 | 20 | 20 |
| | (4-1) Temperature after irradiation (°C) | | 24.9 | 25.9 | 25.2 |
| | (4-1) Secondary resonance frequency before irradiation (Hz) | | 573 | 568 | 573 |
| | (4-1) Secondary resonance frequency after irradiation (Hz) | | 553 | 541 | 549 |
| | (4-1) Absolute value of difference (Hz) | | 20 | 27 | 24 |
| | (4-2) Absolute value of difference in sound transmission loss before and after irradiation (db) | | 0.19 | 0.26 | 0.23 |

**[Table 5]**

| | | | Example 14 |
|---|---|---|---|
| First lamination glass member | Kind | | Green glass 2 |
| | Thickness (mm) | | 1.9 |
| | Solar transmittance (%) | | 70 |
| Second lamination glass member | Kind | | Green glass 1 |
| | Thickness (mm) | | 2 |
| | Solar transmittance (%) | | 70 |
| | Polyvinyl acetal resin | Kind | PVB6 |
| | | Acetalization degree (mol%) | 69 |
| | | Content of hydroxyl group (mol%) | 30 |
| | | Acetylation degree (mol%) | 1 |
| | | Content (parts by weight) | 100 |
| Second, third layers | Plasticizer | Kind | 3GO |
| | | Content (parts by weight) | 38 |
| | Heat shielding substance or coloring agent | Kind | - |
| | | Content (wt%) | - |
| | Total thickness of one end (µm) | | 690 |
| | Total thickness of the other end (µm) | | 690 |
| | Polyvinyl acetal resin | Kind | PVB4 |
| | | Acetalization degree (mol%) | 69 |
| | | Content of hydroxyl group (mol%) | 15 |
| | | Acetylation degree (mol%) | 16 |
| First layer | | Content (parts by weight) | 100 |
| | Plasticizer | Kind | 3GO |
| | | Content (parts by weight) | 78 |
| | Thickness of one end (µm) | | 110 |
| | Thickness of the other end (µm) | | 110 |
| Infrared reflective layer | Kind | | Nano90S |
| | Thickness (µm) | | 100 |
| | Polyvinyl acetal resin | Kind | PVB6 |
| | | Acetalization degree (mol%) | 69 |
| | | Content of hydroxyl group (mol%) | 30 |
| | | Acetylation degree (mol%) | 1 |
| | | Content (parts by weight) | 100 |
| Fourth layer | Plasticizer | Kind | 3GO |
| | | Content (parts by weight) | 38 |
| | Heat shielding substance or coloring agent | Kind | ITO particles /CWO particles /phthalocyanine compound X |
| | | Content (wt%) | 0.9/0.04/0.00 3 |
| | Thickness (µm) | | 390 |

**[Table 6]**

| | | Example 14 |
|---|---|---|
| (1) Solar transmittance (Tds) (%) | | 34 |
| (2) Visible light transmittance (Tv) (%) | | 73 |
| (3) Loss factor (20°C) | | 0.26 |
| (4) Xenon light irradiation test | (4-1) Temperature before irradiation (°C) | 20 |
| | (4-1) Temperature after irradiation (°C) | 27.3 |
| | (4-1) Secondary resonance frequency before irradiation (Hz) | 567 |
| | (4-1) Secondary resonance frequency after irradiation (Hz) | 545 |
| | (4-1) Absolute value of difference (Hz) | 22 |
| | (4-2) Absolute value of difference in sound transmission loss before and after irradiation (db) | 0.21 |

### EXPLANATION OF SYMBOLS

1: First layer
1a: First surface
1b: Second surface
2: Second layer
2a: Outer surface
3: Third layer
3a: Outer surface
11: Interlayer film
11A: Interlayer film (first layer)
11a: First surface
11b: Second surface
21: First lamination glass member
22: Second lamination glass member
31, 31A: Laminated glass

## Claims

1. An interlayer film for laminated glass having a three or more-layer structure, and including:
a first layer,
a second layer disposed on a first surface side of the first layer, and
a third layer disposed on a second surface side that is opposite to the first surface of the first layer,
wherein the first layer contains a polyvinyl acetal resin and a plasticizer,
the second layer contains a polyvinyl acetal resin and a plasticizer,
the third layer contains a polyvinyl acetal resin and a plasticizer,
a content of the plasticizer in the first layer is 68 parts by weight or more and 90 parts by weight or less per 100 parts by weight of the polyvinyl acetal resin in the first layer,
a content of the plasticizer in the second layer is 10 parts by weight or more and 41 parts by weight or less per 100 parts by weight of the polyvinyl acetal resin in the second layer,
a content of the plasticizer in the third layer is 10 parts by weight or more and 41 parts by weight or less per 100 parts by weight of the polyvinyl acetal resin in the third layer,
the second layer further contains heat shielding particles and at least one ingredient of a phthalocyanine compound, a naphthalocyanine compound, an anthracyanine compound and carbon black, and
the third layer further contains heat shielding particles and at least one ingredient of a phthalocyanine compound, a naphthalocyanine compound, an anthracyanine compound and carbon black,
and wherein, when the interlayer film is sandwiched between two sheets of green glass having a thickness of 2 mm to obtain a laminated glass X with a size of 25 mm long x 300 mm wide,
an absolute value of difference between a secondary resonance frequency of the laminated glass X before irradiation with xenon light and a secondary resonance frequency of the laminated glass X after irradiation with xenon light determined by a xenon light irradiation test is 70 Hz or less,
a loss factor at 20°C of the laminated glass X is 0.24 or more,
the loss factor at 20 °C of the laminated glass X being measured by a central exciting method in accordance with ISO 16940, and
a solar transmittance of the laminated glass X is 50% or less,
the solar transmittance of the laminated glass X being measured in accordance with JIS R3106:1998,
the xenon light irradiation test including determining a secondary resonance frequency at 20°C of the laminated glass X by a central exciting method in accordance with ISO16940, irradiating the laminated glass X with xenon light of 190 W/m² for 20 minutes under a condition of 20°C, determining a secondary resonance frequency of the laminated glass X after irradiation with xenon light by a central exciting method in accordance with ISO16940, and calculating an absolute value of difference between the secondary resonance frequency of the laminated glass X before irradiation with xenon light and the secondary resonance frequency of the laminated glass X after irradiation with xenon light.

2. The interlayer film for laminated glass according to claim 1, wherein an absolute value of difference between the secondary resonance frequency of the laminated glass X before irradiation with xenon light and the secondary resonance frequency of the laminated glass X after irradiation with xenon light determined by the xenon light irradiation test is 20 Hz or more.

3. The interlayer film for laminated glass according to claim 1 or 2, wherein when the laminated glass X is stored at 20°C for 56 days or more, a secondary resonance frequency at 20°C of the laminated glass X after storage determined by the central exciting method in accordance with ISO16940 is 650 Hz or less.

4. The interlayer film for laminated glass according to any one of claims 1 to 3, wherein
the second layer is a surface layer of the interlayer film, and
the third layer is a surface layer of the interlayer film.

5. The interlayer film for laminated glass according to claim 4, wherein
the first layer has a glass transition temperature of 5°C or less,
the second layer has a glass transition temperature of 25°C or more, and
the third layer has a glass transition temperature of 25°C or more,
the glass transition temperature being determined by a measurement of viscoelasticity conducted as indicated in the description.

6. The interlayer film for laminated glass according to claim 4 or 5, wherein the polyvinyl acetal resin contained in the first layer has an acetylation degree of 10% by mole or less.

7. The interlayer film for laminated glass according to claim 4 or 5, wherein the polyvinyl acetal resin contained in the first layer has an acetylation degree of 15% by mole or more.

8. The interlayer film for laminated glass according to any one of claims 4 to 7, wherein the polyvinyl acetal resin contained in the first layer is a polyvinyl butyral resin.

9. The interlayer film for laminated glass according to claim 8, wherein when a butyralization degree of the polyvinyl butyral resin contained in the first layer is defined as B% by mole, and an acetylation degree is defined as A% by mole, the polyvinyl butyral resin contained in the first layer is a polyvinyl butyral resin satisfying the formula: B ≥ -0.88 × A + 78.6.

10. The interlayer film for laminated glass according to any one of claims 4 to 9, wherein
a layer that is different from both the second layer and the third layer does not contain heat shielding particles.

11. The interlayer film for laminated glass according to any one of claims 4 to 9, wherein
the ingredient contained in the second layer is pigment blue 15, pigment green 7, or carbon black, and
the ingredient contained in the third layer is pigment blue 15, pigment green 7 or carbon black.

12. The interlayer film for laminated glass according to any one of claims 4 to 11, wherein
the heat shielding particles contained in the second layer are tin-doped indium oxide particles, and
the heat shielding particles contained in the third layer are tin-doped indium oxide particles.

13. The interlayer film for laminated glass according to any one of claims 1 to 12, wherein
the interlayer film has one end and the other end being at the opposite side of the one end, and
the other end has a thickness larger than a thickness of the one end.

14. A laminated glass, comprising:
a first lamination glass member;
a second lamination glass member; and
the interlayer film for laminated glass according to any one of claims 1 to 13,
the interlayer film for laminated glass being arranged between the first lamination glass member and the second lamination glass member.

15. A laminated glass comprising:
a first lamination glass member;
a second lamination glass member; and
an interlayer film for laminated glass having a three or more-layer structure, and including a first layer, a second layer disposed on a first surface side of the first layer, and a third layer disposed on a second surface side that is opposite to the first surface of the first layer,
the interlayer film for laminated glass being arranged between the first lamination glass member and the second lamination glass member,
wherein the first layer contains a polyvinyl acetal resin and a plasticizer,
the second layer contains a polyvinyl acetal resin and a plasticizer,
the third layer contains a polyvinyl acetal resin and a plasticizer,
a content of the plasticizer in the first layer is 68 parts by weight or more and 90 parts by weight or less per 100 parts by weight of the polyvinyl acetal resin in the first layer,
a content of the plasticizer in the second layer is 10 parts by weight or more and 41 parts by weight or less per 100 parts by weight of the polyvinyl acetal resin in the second layer,
a content of the plasticizer in the third layer is 10 parts by weight or more and 41 parts by weight or less per 100 parts by weight of the polyvinyl acetal resin in the third layer,
the second layer further contains heat shielding particles and at least one ingredient of a phthalocyanine compound, a naphthalocyanine compound, an anthracyanine compound and carbon black, and
the third layer further contains heat shielding particles and at least one ingredient of a phthalocyanine compound, a naphthalocyanine compound, an anthracyanine compound and carbon black,
and wherein an absolute value of difference between a secondary resonance frequency of the laminated glass before irradiation with xenon light and a secondary resonance frequency of the laminated glass after irradiation with xenon light determined by a xenon light irradiation test is 70 Hz or less,
the laminated glass has a loss factor at 20°C of 0.24 or more,
the loss factor at 20 °C of the laminated glass being measured by a central exciting method in accordance with ISO 16940, and
the laminated glass has a solar transmittance of 50% or less,
the solar transmittance of the laminated glass being measured in accordance with JIS R3106:1998,
the xenon light irradiation test including determining a secondary resonance frequency at 20°C of the laminated glass by a central exciting method in accordance with ISO16940, irradiating the laminated glass with xenon light of 190 W/m² for 20 minutes under a condition of 20°C, determining a secondary resonance frequency of the laminated glass after irradiation with xenon light by a central exciting method in accordance with ISO16940, and calculating an absolute value of difference between the secondary resonance frequency of the laminated glass before irradiation with xenon light and the secondary resonance frequency of the laminated glass after irradiation with xenon light.

16. The laminated glass according to claim 14 or 15, wherein
the first lamination glass member is green glass or heat ray absorbing plate glass, and
the second lamination glass member is green glass or heat ray absorbing plate glass.

17. The laminated glass according to any one of claims 14 to 16, wherein the laminated glass has a solar transmittance of 48% or less.

## Patentansprüche

1. Zwischenschichtfolie für Verbundglas mit einer drei- oder mehrschichtigen Struktur und umfassend:
eine erste Schicht,
eine zweite Schicht, die auf einer ersten Oberflächenseite der ersten Schicht angeordnet ist, und
eine dritte Schicht, die auf einer zweiten Oberflächenseite, die der ersten Oberfläche der ersten Schicht gegenüberliegt, angeordnet ist,
wobei die erste Schicht ein Polyvinylacetalharz und einen Weichmacher enthält,
die zweite Schicht ein Polyvinylacetalharz und einen Weichmacher enthält,
die dritte Schicht ein Polyvinylacetalharz und einen Weichmacher enthält,
ein Gehalt des Weichmachers in der ersten Schicht 68 Gewichtsteile oder mehr und 90 Gewichtsteile oder weniger pro 100 Gewichtsteile des Polyvinylacetalharzes in der ersten Schicht beträgt,
ein Gehalt des Weichmachers in der zweiten Schicht 10 Gewichtsteile oder mehr und 41 Gewichtsteile oder weniger pro 100 Gewichtsteile des Polyvinylacetalharzes in der zweiten Schicht beträgt,
ein Gehalt des Weichmachers in der dritten Schicht 10 Gewichtsteile oder mehr und 41 Gewichtsteile oder weniger pro 100 Gewichtsteile des Polyvinylacetalharzes in der dritten Schicht beträgt,
die zweite Schicht weiterhin hitzeabschirmende Partikel und mindestens einen Bestandteil aus einer Phthalocyaninverbindung, einer Naphthalocyaninverbindung, einer Anthracyaninverbindung und Ruß enthält, und
die dritte Schicht weiterhin hitzeabschirmende Partikel und mindestens einen Bestandteil aus einer Phthalocyaninverbindung, einer Naphthalocyaninverbindung, einer Anthracyaninverbindung und Ruß enthält,
und wobei, wenn die Zwischenschichtfolie zwischen zwei Grünglasplatten mit einer Dicke von 2 mm eingefügt wird, um ein Verbundglas X mit einer Größe von 25 mm Länge x 300 mm Breite zu erhalten,
ein Absolutwert der Differenz zwischen einer sekundären Resonanzfrequenz des Verbundglases X vor der Bestrahlung mit Xenonlicht und einer sekundären Resonanzfrequenz des Verbundglases X nach der Bestrahlung mit Xenonlicht, bestimmt durch einen Xenonlicht-Bestrahlungstest, 70 Hz oder weniger beträgt,
ein Verlustfaktor bei 20°C des Verbundglases X 0,24 oder mehr beträgt,
wobei der Verlustfaktor bei 20°C des Verbundglases X durch ein zentrales Anregungsverfahren gemäß ISO 16940 gemessen wird, und
eine Solartransmission des Verbundglases X 50% oder weniger beträgt,
wobei die Solartransmission des Verbundglases X gemäß JIS R3106:1998 gemessen wird,
wobei der Xenonlicht-Bestrahlungstest das Bestimmen einer sekundären Resonanzfrequenz des Verbundglases X bei 20°C durch ein zentrales Anregungsverfahren gemäß ISO 16940,
das Bestrahlen des Verbundglases X mit Xenonlicht von 190 W/m² für 20 Minuten unter Bedingungen von 20°C, das Bestimmen einer sekundären Resonanzfrequenz des Verbundglases X nach der Bestrahlung mit Xenonlicht durch ein zentrales Anregungsverfahren gemäß ISO 16940, und das Berechnen eines Absolutwertes der Differenz zwischen der sekundären Resonanzfrequenz des Verbundglases X vor der Bestrahlung mit Xenonlicht und der sekundären Resonanzfrequenz des Verbundglases X nach der Bestrahlung mit Xenonlicht umfasst.

2. Zwischenschichtfolie für Verbundglas nach Anspruch 1, wobei ein Absolutwert der Differenz zwischen der sekundären Resonanzfrequenz des Verbundglases X vor der Bestrahlung mit Xenonlicht und der sekundären Resonanzfrequenz des Verbundglases X nach der Bestrahlung mit Xenonlicht, bestimmt durch den Xenonlicht-Bestrahlungstest, 20 Hz oder mehr beträgt.

3. Zwischenschichtfolie für Verbundglas nach Anspruch 1 oder 2, wobei, wenn das Verbundglas X bei 20°C für 56 Tage oder länger gelagert wird, eine sekundäre Resonanzfrequenz bei 20°C des Verbundglases X nach der Lagerung, bestimmt durch das zentrale Anregungsverfahren gemäß ISO 16940, 650 Hz oder weniger beträgt.

4. Zwischenschichtfolie für Verbundglas nach einem der Ansprüche 1 bis 3, wobei die zweite Schicht eine Oberflächenschicht der Zwischenschichtfolie ist, und
die dritte Schicht eine Oberflächenschicht der Zwischenschichtfolie ist.

5. Zwischenschichtfolie für Verbundglas nach Anspruch 4, wobei
die erste Schicht eine Glasübergangstemperatur von 5°C oder weniger aufweist,
die zweite Schicht eine Glasübergangstemperatur von 25°C oder mehr aufweist und
die dritte Schicht eine Glasübergangstemperatur von 25°C oder mehr aufweist,
wobei die Glasübergangstemperatur durch eine Messung der Viskoelastizität bestimmt wird, die wie in der Beschreibung angegeben durchgeführt wird.

6. Zwischenschichtfolie für Verbundglas nach Anspruch 4 oder 5, wobei das in der ersten Schicht enthaltene Polyvinylacetalharz einen Acetylierungsgrad von 10 Mol-% oder weniger aufweist.

7. Zwischenschichtfolie für Verbundglas nach Anspruch 4 oder 5, wobei das in der ersten Schicht enthaltene Polyvinylacetalharz einen Acetylierungsgrad von 15 Mol-% oder mehr aufweist.

8. Zwischenschichtfolie für Verbundglas nach einem der Ansprüche 4 bis 7, wobei das in der ersten Schicht enthaltene Polyvinylacetalharz ein Polyvinylbutyralharz ist.

9. Zwischenschichtfolie für Verbundglas nach Anspruch 8, wobei, wenn ein Butyralisierungsgrad des in der ersten Schicht enthaltenen Polyvinylbutyralharzes als B Mol-% definiert ist und ein Acetylierungsgrad als A Mol-% definiert ist, das in der ersten Schicht enthaltene Polyvinylbutyralharz ein Polyvinylbutyralharz ist, das der Formel: B ≥ -0,88 × A + 78,6 genügt.

10. Zwischenschichtfolie für Verbundglas nach einem der Ansprüche 4 bis 9, wobei eine Schicht, die sich sowohl von der zweiten Schicht als auch von der dritten Schicht unterscheidet, keine hitzeabschirmenden Partikel enthält.

11. Zwischenschichtfolie für Verbundglas nach einem der Ansprüche 4 bis 9, wobei der in der zweiten Schicht enthaltene Bestandteil Pigment Blau 15, Pigment Grün 7 oder Ruß ist, und
der in der dritten Schicht enthaltene Bestandteil Pigment Blau 15, Pigment Grün 7 oder Ruß ist.

12. Zwischenschichtfolie für Verbundglas nach einem der Ansprüche 4 bis 11, wobei die in der zweiten Schicht enthaltenen hitzeabschirmenden Partikel zinndotierte Indiumoxidpartikel sind und
die in der dritten Schicht enthaltenen hitzeabschirmenden Partikel zinndotierte Indiumoxidpartikel sind.

13. Zwischenschichtfolie für Verbundglas nach einem der Ansprüche 1 bis 12, wobei die Zwischenschichtfolie ein Ende aufweist und das andere Ende sich auf der gegenüberliegenden Seite des einen Endes befindet und
das andere Ende eine größere Dicke als eine Dicke des einen Endes aufweist.

14. Verbundglas, umfassend:
ein erstes Verbundglaselement;
ein zweites Verbundglaselement; und
die Zwischenschichtfolie für Verbundglas nach einem der Ansprüche 1 bis 13,
wobei die Zwischenschichtfolie für Verbundglas zwischen dem ersten Verbundglaselement und dem zweiten Verbundglaselement angeordnet ist.

15. Verbundglas, umfassend:
ein erstes Verbundglaselement;
ein zweites Verbundglaselement; und
eine Zwischenschichtfolie für Verbundglas mit einer drei- oder mehrschichtigen Struktur und umfassend eine erste Schicht, eine zweite Schicht, die auf einer ersten Oberflächenseite der ersten Schicht angeordnet ist, und eine dritte Schicht, die auf einer zweiten Oberflächenseite, die der ersten Oberfläche der ersten Schicht gegenüberliegt, angeordnet ist,
wobei die Zwischenschichtfolie für Verbundglas zwischen dem ersten Verbundglaselement und dem zweiten Verbundglaselement angeordnet ist,
wobei die erste Schicht ein Polyvinylacetalharz und einen Weichmacher enthält,
die zweite Schicht ein Polyvinylacetalharz und einen Weichmacher enthält,
die dritte Schicht ein Polyvinylacetalharz und einen Weichmacher enthält,
ein Gehalt des Weichmachers in der ersten Schicht 68 Gewichtsteile oder mehr und 90 Gewichtsteile oder weniger pro 100 Gewichtsteile des Polyvinylacetalharzes in der ersten Schicht beträgt,
ein Gehalt des Weichmachers in der zweiten Schicht 10 Gewichtsteile oder mehr und 41 Gewichtsteile oder weniger pro 100 Gewichtsteile des Polyvinylacetalharzes in der zweiten Schicht beträgt,
ein Gehalt des Weichmachers in der dritten Schicht 10 Gewichtsteile oder mehr und 41 Gewichtsteile oder weniger pro 100 Gewichtsteile des Polyvinylacetalharzes in der dritten Schicht beträgt,
die zweite Schicht weiterhin hitzeabschirmende Partikel und mindestens einen Bestandteil aus einer Phthalocyaninverbindung, einer Naphthalocyaninverbindung, einer Anthracyaninverbindung und Ruß enthält, und
die dritte Schicht weiterhin hitzeabschirmende Partikel und mindestens einen Bestandteil aus einer Phthalocyaninverbindung, einer Naphthalocyaninverbindung, einer Anthracyaninverbindung und Ruß enthält,
und wobei ein Absolutwert der Differenz zwischen einer sekundären Resonanzfrequenz des Verbundglases vor der Bestrahlung mit Xenonlicht und einer sekundären Resonanzfrequenz des Verbundglases nach der Bestrahlung mit Xenonlicht, bestimmt durch einen Xenonlicht-Bestrahlungstest, 70 Hz oder weniger beträgt,
das Verbundglas einen Verlustfaktor bei 20°C von 0,24 oder mehr aufweist,
wobei der Verlustfaktor bei 20°C des Verbundglases durch ein zentrales Anregungsverfahren gemäß ISO 16940 gemessen wird, und
das Verbundglas eine Solartransmission von 50% oder weniger aufweist,
wobei die Solartransmission des Verbundglases gemäß JIS R3106:1998 gemessen wird,
wobei der Xenonlicht-Bestrahlungstest das Bestimmen einer sekundären Resonanzfrequenz des Verbundglases bei 20°C durch ein zentrales Anregungsverfahren gemäß ISO 16940, das Bestrahlen des Verbundglases mit Xenonlicht von 190 W/m² für 20 Minuten unter Bedingungen von 20°C, das Bestimmen einer sekundären Resonanzfrequenz des Verbundglases nach der Bestrahlung mit Xenonlicht durch ein zentrales Anregungsverfahren gemäß ISO 16940, und das Berechnen eines Absolutwertes der Differenz zwischen der sekundären Resonanzfrequenz des Verbundglases vor der Bestrahlung mit Xenonlicht und der sekundären Resonanzfrequenz des Verbundglases nach der Bestrahlung mit Xenonlicht umfasst.

16. Verbundglas nach Anspruch 14 oder 15, wobei
das erste Verbundglaselement Grünglas oder Wärmestrahlen absorbierendes Flachglas ist und
das zweite Verbundglaselement Grünglas oder Wärmestrahlen absorbierendes Flachglas ist.

17. Verbundglas nach einem der Ansprüche 14 bis 16, wobei das Verbundglas eine Solartransmission von 48% oder weniger aufweist.

## Revendications

1. Film intercouche pour verre feuilleté ayant une structure à trois couches ou plus, et incluant :
une première couche,
une deuxième couche disposée sur un premier côté de surface de la première couche, et
une troisième couche disposée sur un second côté de surface qui est opposé à la première surface de la première couche,
dans lequel la première couche contient une résine de polyacétal de vinyle et un plastifiant,
la deuxième couche contient une résine de polyacétal de vinyle et un plastifiant,
la troisième couche contient une résine de polyacétal de vinyle et un plastifiant,
une teneur en plastifiant dans la première couche est de 68 parties en poids ou plus et de 90 parties en poids ou moins pour 100 parties en poids de la résine de polyacétal de vinyle dans la première couche,
une teneur en plastifiant dans la deuxième couche est de 10 parties en poids ou plus et de 41 parties en poids ou moins pour 100 parties en poids de la résine de polyacétal de vinyle dans la deuxième couche,
une teneur en plastifiant dans la troisième couche est de 10 parties en poids ou plus et de 41 parties en poids ou moins pour 100 parties en poids de la résine de polyacétal de vinyle dans la troisième couche,
la deuxième couche contient en outre des particules de protection thermique et au moins un ingrédient d'un composé de phtalocyanine, d'un composé de naphtalocyanine, d'un composé d'anthracyanine et de noir de carbone, et
la troisième couche contient en outre des particules de protection thermique et au moins un ingrédient d'un composé de phtalocyanine, d'un composé de naphtalocyanine, d'un composé d'anthracyanine et de noir de carbone,
et dans lequel, lorsque le film intercouche est pris en sandwich entre deux feuilles de verre à bouteille ayant une épaisseur de 2 mm pour obtenir un verre feuilleté X ayant une taille de 25 mm de long x 300 mm de large,
une valeur absolue d'une différence entre une fréquence de résonance secondaire du verre feuilleté X avant projection d'une lumière au xénon et une fréquence de résonance secondaire du verre feuilleté X après projection de la lumière au xénon déterminée par un essai de projection de lumière au xénon est de 70 Hz ou moins,
un facteur de pertes à 20 °C du verre feuilleté X est de 0,24 ou plus,
le facteur de pertes à 20 °C du verre feuilleté X étant mesuré par un procédé d'excitation centrale conformément à la norme ISO 16940, et
un facteur de transmission solaire du verre feuilleté X est de 50 % ou moins,
le facteur de transmission solaire du verre feuilleté X étant mesuré conformément à la norme JIS R3106:1998,
l'essai de projection de lumière au xénon incluant de déterminer une fréquence de résonance secondaire à 20 °C du verre feuilleté X par un procédé d'excitation centrale conformément à la norme ISO 16940, soumettre le verre feuilleté X à de la lumière au xénon de 190 W/m² pendant 20 minutes sous une condition de 20 °C, déterminer une fréquence de résonance secondaire du verre feuilleté X après projection de la lumière au xénon par un procédé d'excitation centrale conformément à la norme ISO 16940, et calculer une valeur absolue d'une différence entre la fréquence de résonance secondaire du verre feuilleté X avant projection de la lumière au xénon et la fréquence de résonance secondaire du verre feuilleté X après projection de la lumière au xénon.

2. Film intercouche pour verre feuilleté selon la revendication 1, dans lequel une valeur absolue d'une différence entre la fréquence de résonance secondaire du verre feuilleté X avant projection d'une lumière au xénon et la fréquence de résonance secondaire du verre feuilleté X après projection de la lumière au xénon déterminée par l'essai de projection de lumière au xénon est de 20 Hz ou plus.

3. Film intercouche pour verre feuilleté selon la revendication 1 ou 2, dans lequel, lorsque le verre feuilleté X est stocké à 20 °C pendant 56 jours ou plus, une fréquence de résonance secondaire à 20 °C du verre feuilleté X après stockage, déterminée par le procédé d'excitation centrale conformément à la norme ISO 16940 est de 650 Hz ou moins.

4. Film intercouche pour verre feuilleté selon l'une quelconque des revendications 1 à 3, dans lequel
la deuxième couche est une couche de surface du film intercouche, et
la troisième couche est une couche de surface du film intercouche.

5. Film intercouche pour verre feuilleté selon la revendication 4, dans lequel
la première couche a une température de transition vitreuse de 5 °C ou moins,
la deuxième couche a une température de transition vitreuse de 25 °C ou plus, et
la troisième couche a une température de transition vitreuse de 25 °C ou plus,
la température de transition vitreuse étant déterminée par une mesure de viscoélasticité effectuée comme indiqué dans la description.

6. Film intercouche pour verre feuilleté selon la revendication 4 ou 5, dans lequel la résine de polyacétal de vinyle contenue dans la première couche présente un degré d'acétylation de 10 % en mole ou moins.

7. Film intercouche pour verre feuilleté selon la revendication 4 ou 5, dans lequel la résine de polyacétal de vinyle contenue dans la première couche présente un degré d'acétylation de 15 % en mole ou plus.

8. Film intercouche pour verre feuilleté selon l'une quelconque des revendications 4 à 7, dans lequel la résine de polyacétal de vinyle contenue dans la première couche est une résine de polybutyral de vinyle.

9. Film intercouche pour verre feuilleté selon la revendication 8, dans lequel, lorsqu'un degré de butyralisation de la résine de polybutyral de vinyle contenue dans la première couche est défini comme étant B % en mole, et qu'un degré d'acétylation est défini comme étant A % en mole, la résine de polybutyral de vinyle contenue dans la première couche est une résine de polybutyral de vinyle satisfaisant à la formule : B ≥ - 0,88 × A + 78,6.

10. Film intercouche pour verre feuilleté selon l'une quelconque des revendications 4 à 9, dans lequel
une couche qui est différente à la fois de la deuxième et de la troisième couche ne contient pas de particules de protection thermique.

11. Film intercouche pour verre feuilleté selon l'une quelconque des revendications 4 à 9, dans lequel
l'ingrédient contenu dans la deuxième couche est le pigment bleu 15, le pigment vert 7 ou le noir de carbone, et
l'ingrédient contenu dans la troisième couche est le pigment bleu 15, le pigment vert 7 ou le noir de carbone.

12. Film intercouche pour verre feuilleté selon l'une quelconque des revendications 4 à 11, dans lequel
les particules de protection thermique contenues dans la deuxième couche sont des particules d'oxyde d'indium dopé à l'étain, et
les particules de protection thermique contenues dans la troisième couche sont des particules d'oxyde d'indium dopé à l'étain.

13. Film intercouche pour verre feuilleté selon l'une quelconque des revendications 1 à 12, dans lequel
le film intercouche a une première extrémité et la seconde extrémité étant sur le côté opposé à la première extrémité, et
la seconde extrémité a une épaisseur supérieure à une épaisseur de la première extrémité.

14. Verre feuilleté, comportant :
un premier élément de verre de feuilletage ;
un second élément de verre de feuilletage ; et
le film intercouche pour verre feuilleté selon l'une quelconque des revendications 1 à 13,
le film intercouche pour verre feuilleté étant agencé entre le premier élément de verre de feuilletage et le second élément de verre de feuilletage.

15. Verre feuilleté comportant :
un premier élément de verre de feuilletage ;
un second élément de verre de feuilletage ; et
un film intercouche pour verre feuilleté ayant une structure à trois couches ou plus, et incluant une première couche, une deuxième couche disposée sur un premier côté de surface de la première couche, et une troisième couche disposée sur un second côté de surface qui est opposé à la première surface de la première couche,
le film intercouche pour verre feuilleté étant agencé entre le premier élément de verre de feuilletage et le second élément de verre de feuilletage,
dans lequel la première couche contient une résine de polyacétal de vinyle et un plastifiant,
la deuxième couche contient une résine de polyacétal de vinyle et un plastifiant,
la troisième couche contient une résine de polyacétal de vinyle et un plastifiant,
une teneur en plastifiant dans la première couche est de 68 parties en poids ou plus et de 90 parties en poids ou moins pour 100 parties en poids de la résine de polyacétal de vinyle dans la première couche,
une teneur en plastifiant dans la deuxième couche est de 10 parties en poids ou plus et de 41 parties en poids ou moins pour 100 parties en poids de la résine de polyacétal de vinyle dans la deuxième couche,
une teneur en plastifiant dans la troisième couche est de 10 parties en poids ou plus et de 41 parties en poids ou moins pour 100 parties en poids de la résine de polyacétal de vinyle dans la troisième couche,
la deuxième couche contient en outre des particules de protection thermique et au moins un ingrédient d'un composé de phtalocyanine, d'un composé de naphtalocyanine, d'un composé d'anthracyanine et de noir de carbone, et
la troisième couche contient en outre des particules de protection thermique et au moins un ingrédient d'un composé de phtalocyanine, d'un composé de naphtalocyanine, d'un composé d'anthracyanine et de noir de carbone,
et dans lequel une valeur absolue d'une différence entre une fréquence de résonance secondaire du verre feuilleté avant projection d'une lumière au xénon et une fréquence de résonance secondaire du verre feuilleté après projection de la lumière au xénon déterminée par un essai de projection de lumière au xénon est de 70 Hz ou moins,
le verre feuilleté a un facteur de pertes à 20 °C de 0,24 ou plus,
le facteur de pertes à 20 °C du verre feuilleté étant mesuré par un procédé d'excitation centrale conformément à la norme ISO 16940, et
le verre feuilleté présente un facteur de transmission solaire de 50 % ou moins,
le facteur de transmission solaire du verre feuilleté étant mesuré conformément à la norme JIS R3106:1998,
l'essai de projection de lumière au xénon incluant de déterminer une fréquence de résonance secondaire à 20 °C du verre feuilleté par un procédé d'excitation centrale conformément à la norme ISO 16940, soumettre le verre feuilleté à une lumière au xénon de 190 W/m² pendant 20 minutes sous une condition de 20 °C, déterminer une fréquence de résonance secondaire du verre feuilleté après projection de la lumière au xénon par un procédé d'excitation centrale conformément à la norme ISO 16940, et calculer une valeur absolue d'une différence entre la fréquence de résonance secondaire du verre feuilleté avant projection de la lumière au xénon et la fréquence de résonance secondaire du verre feuilleté après projection de la lumière au xénon.

16. Verre feuilleté selon la revendication 14 ou 15, dans lequel
le premier élément de verre de feuilletage est un verre à bouteille ou une glace polie absorbant les rayons thermiques, et
le second élément de verre stratifié est un verre à bouteille ou une glace polie absorbant les rayons thermiques.

17. Verre feuilleté selon l'une quelconque des revendications 14 à 16, dans lequel le verre feuilleté présente un facteur de transmission solaire de 48 % ou moins.
